# EUROPEAN PATENT APPLICATION

(11) **EP 4 776 210 A1**
(43) Date of publication of application: **15.07.2026**
(21) Application number: 25169249.7
(22) Date of filing: 08.04.2025
(51) Int. Cl.: G06Q 20/40, G06Q 30/018

(54) **SYSTEM AND METHOD FOR DETECTING INTERNET FRAUD USING A MACHINE LEARNING MODEL**

(30) Priority: 08.01.2025 US 202519013327
(71) Applicant: Shift4 Technology Limited, VLT1436 Valletta (MT)
(72) Inventor: UR, Shmuel, 2016400 Shorashim (IL); DUBINSKY, Ilya, 4464501 Kefar Sava (IL)
(74) Representative: Pearl Cohen UK

(57) **Abstract**

A system and method for detecting fraud may scan (e.g. by computer server) a target website provided by another server to identify products provided by the website. Based on the scanning, a process may calculate probabilities for combinations of the identified products, where a cost for each combination equals a cost of a new transaction to take place at the target website, and generate an authentication score for the transaction based on the calculated probabilities.

## Description

### FIELD OF THE INVENTION

The present invention relates generally to detecting online fraud; more specifically, embodiments may identify internet transactions that may involve fraud using advanced machine learning algorithms and improvements to machine learning algorithms.

### BACKGROUND OF THE INVENTION

Online shopping is widely used. In online shopping, sellers typically present products, prices and shipping costs in a website where buyers can select and buy products, payment method, shipping and the like. Online shopping is highly susceptible to fraud, e.g., since the buyer is not always seen by, or personally known to, the seller, e.g., where payment is done digitally.

In other cases, a fraud may be related to, or even performed by, an owner (or an authorized entity) of a website. For example, a merchant authorized to receive funds via a website may use the website to receive funds for another, unauthorized merchant. However, current or known systems and methods cannot readily identify and/or prevent a fraud carried out by an owner or authorized entity of a website, or based purely on a few, readily available transaction characteristics such as, e.g., merely the total cost of the transaction.

### SUMMARY OF THE INVENTION

A system and method for detecting fraud may scan (e.g. by computer server) a target website provided by another server to identify units or products provided by the website. Based on the scanning, a process may calculate probabilities for combinations of the identified products (such as, e.g., a probability that a given combination of products {Xp1, Yp2,.. Zpn}, where X, Y, ... denote quantities of items p1, p2... etc., constitutes a legitimate transaction, or describes transactions previously and/or frequently executed or at the website as indicated by historical data) - where a cost for each combination equals a cost of a new transaction to take place at the target website, and generate an authentication score for the transaction based on the calculated probabilities. (A nonlimiting algorithm for calculating a probability of fraud or authentication score for a transaction is provided in Tables 16-17: a machine learning model may predict a probability for each combination of items based on tags describing the items and indicating, e.g., whether the combination is common or prevalent in past transactions as described in historical data, and probabilities of fraud for each combination may be normalized and/or aggregated to provide a final authentication score or probability of fraud.)

An authentication score may be generated based at least in part on a shipping address. A set of monetary transactions may be calculated based on one or more discount coupons. A discount coupon may be identified by relating data in transactions related to the website to data in the set of monetary transactions. A discount coupon may be identified based on a number of same or similar purchased items. An authentication score may be generated based on the number of product units purchased.

### BRIEF DESCRIPTION OF THE DRAWINGS

Non-limiting examples of embodiments of the disclosure are described below with reference to figures attached hereto that are listed following this paragraph. Identical features that appear in more than one figure are generally labeled with a same label in all the figures in which they appear. A label labeling an icon representing a given feature of an embodiment of the disclosure in a figure may be used to reference the given feature. Dimensions of features shown in the figures are chosen for convenience and clarity of presentation and are not necessarily shown to scale. For example, the dimensions of some of the elements may be exaggerated relative to other elements for clarity, or several physical components may be included in one functional block or element. Further, where considered appropriate, reference numerals may be repeated among the figures to indicate corresponding or analogous elements.

The subject matter regarded as the invention is particularly pointed out and distinctly claimed in the concluding portion of the specification. The invention, however, both as to organization and method of operation, together with objects, features and advantages thereof, may best be understood by reference to the following detailed description when read with the accompanied drawings. Embodiments of the invention are illustrated by way of example and not of limitation in the figures of the accompanying drawings, in which like reference numerals indicate corresponding, analogous or similar elements, and in which:
Fig. 1 shows a block diagram of a computing device according to illustrative embodiments of the present invention;
Fig. 2 is an overview of a system according to illustrative embodiments of the present invention;
Fig. 3 shows a flowchart of a method according to illustrative embodiments of the present invention;
Fig. 4 shows a flowchart of a method according to illustrative embodiments of the present invention;
Fig. 5 shows an example process for detecting internet fraud according to some embodiments of the invention; and
Fig. 6 shows an example process of analyzing internet transactions according to some embodiments of the invention.

### DETAILED DESCRIPTION OF THE INVENTION

In the following detailed description, numerous specific details are set forth in order to provide a thorough understanding of the invention. However, it will be understood by those skilled in the art that the present invention may be practiced without these specific details. In other instances, well-known methods, procedures, and components, modules, units and/or circuits have not been described in detail so as not to obscure the invention. Some features or elements described with respect to one embodiment may be combined with features or elements described with respect to other embodiments. For the sake of clarity, discussion of same or similar features or elements may not be repeated.

Although embodiments of the invention are not limited in this regard, discussions utilizing terms such as, for example, "processing," "computing," "calculating," "determining," "establishing", "analyzing", "checking", or the like, may refer to operation(s) and/or process(es) of a computer, a computing platform, a computing system, or other electronic computing device, that manipulates and/or transforms data represented as physical (e.g., electronic) quantities within the computer's registers and/or memories into other data similarly represented as physical quantities within the computer's registers and/or memories or other information non-transitory storage medium that may store instructions to perform operations and/or processes. Although embodiments of the invention are not limited in this regard, the terms "plurality" and "a plurality" as used herein may include, for example, "multiple" or "two or more". The terms "plurality" or "a plurality" may be used throughout the specification to describe two or more components, devices, elements, units, parameters, or the like. The term set when used herein may include one or more items.

Unless explicitly stated, the method embodiments described herein are not constrained to a particular order in time or to a chronological sequence. Additionally, some of the described method elements can occur, or be performed, simultaneously, at the same point in time, or concurrently. Some of the described method elements may be skipped, or they may be repeated, during a sequence of operations of a method.

Some embodiments of the invention may detect internet fraud using advanced machine learning technology used in appropriate computerized algorithms. For example, in order to determine whether an incoming/pending internet transaction taking place on a website is potentially fraudulent, some embodiments may determine combinations of products offered on the website - where a cost for each combination equals the cost of the pending transaction. For each combination found, some embodiments may predict, using a machine learning model, a likelihood that quantities of items included in that combination may, in fact, be included in a single legitimate transaction on the website (for example, some embodiments may determine how fraud-likely, or how common in historical data, is a transaction including a combination of X units of product A, Y units of product B,... etc., based on data items describing historical internet transactions; for instance, if the combination and/or constituent number of units appear in many historical transactions, some embodiments may determine a low fraud probability or likelihood, e.g., 0.1, for the combination; if the combination and/or constituent numbers of units do not appear in historical transactions, some embodiments may determine a high probability of fraud, e.g., of 0.9 for the combination). Based on likelihood values or probabilities of fraud determined for each combination of items whose cost equals the cost of the pending transaction, some embodiments may generate a final or aggregated probability of fraud, or "authentication score" for the pending transaction, and perform automated actions based on the generated/aggregated score. In some embodiments, predictions of fraud probability or likelihood values (e.g., for a given combination of items) by a machine learning model may be performed using labels or tags describing items (e.g., for each item or item type included in the combination): for instance, tags or labels describing the item may be input into the machine learning model, and the model may produce likelihood values or a probability distribution for different quantities or numbers of units of that item (e.g., X units of item A) being included in a single transaction. See, e.g., nonlimiting example processes for generating probabilities of fraud in Tables 16-17. Some embodiments may improve machine learning algorithms for example by leveraging task-specific architectures and optimization strategies: training and using different models for performing different, corresponding tasks, such as for example using a first model for predicting probabilities for combinations of items based on tags provided as input, and using a second model for determining tags for items using information linking item names and/or images to tags may, for example, reduce complexity in training and inference for each model, minimizes error propagation, and allowing for fine-tuned performance on individual tasks. Additionally, such a modular approach may support scalability and reusability, as each model can be independently updated, fine-tuned or replaced to adapt to new data or tasks, improving the overall system's adaptability and robustness.

Embodiments of the invention may detect fraud or suspicious activity (e.g. a suspicious or fraud-likely amount intended to be spent online), for example, based on a fraud analysis server executing a web scraping process to scan or scrape merchants' websites. In other embodiments this may be based on a data transfer from a cooperating server operating a target website (e.g. a target website's server may transfer information re products and costs to a fraud analysis server).

Embodiments of the invention may allow a server to detect fraud or service agreement violations, by recognizing transactions unlikely to be taking place, since the transactions are unlikely to be made up of combinations of goods or services actually sold by a server's website. When a server receives a new proposed transaction from a target website, it may use data previously obtained (e.g. by scraping) from the target website. In some cases, a new transaction or another event may trigger scraping or obtaining data from a target website, e.g. in case data on the target website has changed since the last obtaining of data. A server may be notified of a change in a website via, e.g., an alert for the website. In some embodiments, if the website has changed scraping may be performed, e.g., only on the parts that changed.

An embodiment may execute a process (e.g., at a computer server such as a fraud analysis server) which may have or gather a large amount of knowledge which may then me compared to a future intended, or newly seen, transaction to take place at a target website, e.g. by scanning target websites provided by servers to identify products provided by the websites. Based on the scanning, a fraud analysis server may calculate a set of possible amounts (which may be, e.g., total costs or prices) related to each of a set of possible or conceivable transactions (e.g. each transaction including a combination of goods from one target website and a number of units for each good). For each conceivable transaction, a probability may be calculated (describing, e.g., a likelihood to purchase specific quantities or numbers of items in the transaction: for example, a probability of 0.7 to buy 1 unit of item A, a probability of 0.2 to buy 2 units of item A, and a probability of 0.1 to buy 1 unit of item A in a single transaction), and total costs or amounts for highly probable conceivable transactions (for which, e.g., a probability above a threshold T were calculated) and/or total costs or amounts for transactions occurring more than X times in historical data (where X may be a threshold value of, e.g., 100) may be, e.g., white listed. Details of a specific transaction to be evaluated, e.g. taking place at the target website, may be received, for example the identity and/or description of the target website or merchant and/or what online store the purchase was made; and the identifier of the buyer, and other information such as buyer address, and the set of goods in the intended transaction. An authentication score may be calculated or generated for the transaction to be evaluated based on the calculated probabilities of a set of products (e.g. a number of product units of a certain type, such as five pairs of socks) matching or being similar to the products in the intended transaction. This matching may be performed by comparing the cost of a set of products (e.g. with shipping, discounts or other adjustments) proposed to be purchased in a transaction to the costs of sets of products deemed to be legitimate purchases. When used herein, a probability is typically described as on a 0-1 scale, 0 being not likely at all, and 1 being definite. However, other scales may be used.

An "amount" or "amounts" as used herein may refer to, e.g., (a) costs of a plurality of items in a transaction; (b) a total or overall cost of a transaction; or (c) quantities or numbers of units of an item in a transaction. A person of ordinary skill in the pertinent arts of computer programming would be able to identify the specific amount (e.g., among (a)-(c)) referred to with regard or used in specific, nonlimiting examples and code implementations provided herein.

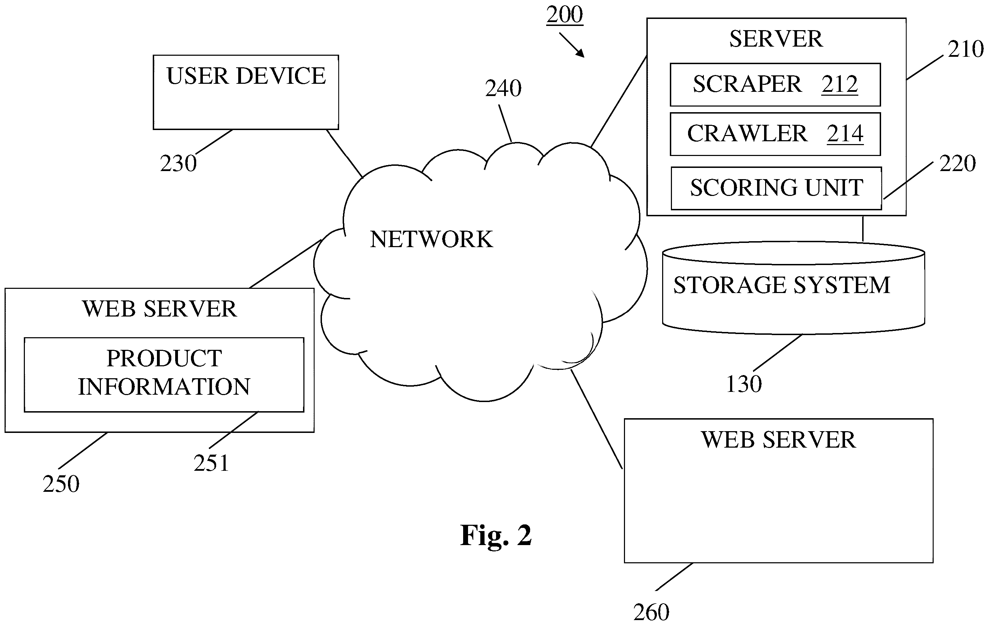

An embodiment may scan a target server or website to gather general information regarding the merchant or online store (e.g. operated by web server 250 shown in Fig. 2), for example in advance of the intended transaction (although it need not be done in advance), e.g. via "scraping" the online store to gather information such as:
▪ Which products, product units or goods are offered by the merchant/store;
▪ Cost of products/services offered by the merchant/store:
   a. Type of products; type may be correlated with rules, e.g. maintained by the server operating the process. Rules may include, for example:
      i. This product/type of product or service requires fast shipping (e.g. must be fresh), or needs to arrive before specific date (e.g. by Christmas);
      ii. This product is usually bought in certain quantities (e.g. 1, few, many)
▪ Cost of shipping (e.g., depending on customer address)
▪ Possible discounts

A process may use this data to analyze different combinations of products, product units or services offered by a particular merchant or website. One method may determine which combination are possible (as opposed to typical or likely) using a process such as an adaptation of a coin change algorithm, which may, given an integer array of entities of size N representing different types of entities and an integer sum (e.g. of costs of the items or entities), find the number of ways (where the number of ways can be zero in some cases) to make the sum by using different combinations from the entities. For every combination of products or product units there is a cost of the products at a target website, and there are possible costs of shipping (some depending on user location or other factors). A process may factor in costs due to possible discounts. The discounts may not be all on the website of the merchant (for example, the site may have a place to insert external coupons).

A "combination" of products, product units or services in a transaction to be evaluated, and in transactions created as possible in target websites, is discussed herein: such a combination may include only one product, or multiple products.

While the prices and the shipping costs are typically explicit in the website and can be found by scanning or scraping the website, the discounts may not be seen in the website. It may be that after shopping a customer is asked for a coupon code. To determine what kind of discounts are possible, a process may, e.g.:
▪ Search/scrape the Internet for discounts deals for this target website or merchant. A process may use automated processes that search the internet for coupons, which can also be used by the process (e.g. code-aggregating sites such as CouponCabin, Dealspl.us, RetailMeNot, etc.)
▪ Analyze costs or amounts paid on the website, assuming that most discounts are linear amounts (5%, 10% etc.), and calculate which discounts coupons exist, by finding the relationship between amounts paid and amounts possible. For example, if possible amounts are $29.72 and $35.67 and amounts paid are $28.23 and $33.89, a process can estimate that a 5% discount coupon exists. In general, there are common coupons and when a process inputs unusual amount number it can check if a common coupon (e.g. 5% discount) exists. In some embodiments, e.g. when a fraud detection server is in cooperation with a server operating a target website, actual amounts paid on the website may be provided by the website to the process determining the validity of transactions; e.g. data regarding the amounts paid in transactions, or other data such as products data 251 (Fig. 2), may be provided by server 250 (Fig. 2) to server 210. This may be done to find bugs in the system, or help diagnose strange usage of the target website. In general, server 250 may send any relevant information to server 210, e.g. purchases, transactions, pricing information for the target website operated by server 250 (which may obviate the need for scraping) etc.
In some embodiments, some added/contingent costs such as shipping costs and/or discounts or coupons may be identified and/or scraped using dynamically programmed browser events.

Some embodiments may include scanning, by a server comprising the processor, a website (e.g., the target website) to identify, e.g.: a plurality of items provided by the website, a plurality of tags associated with one or more of the items.

For example, according to some embodiments, web scraping or web data extraction may include using computer programs or bots to crawl through a target website and collect necessary data, for example using the "BeautifulSoup" Python library. A nonlimiting example Python web scraping process is provided in Table 6:

```
     from bs4 import BeautifuSoup
     import requests
     import pandas as pd
     import urllib.parse
     seed_url = 'example.com/laptops'
     response = requests.get(seed_url) #Checking whether the request is accepted or not
     response.status_code #200 is the code refer to OK Status, which means request is accepted
     200
     soup = BeautifulSoup(response.content, 'html.parser')
     results = soup.find_all('div', {'class':'item-container'})
     len(results)
     results[1]
     #Name and Price of the item
     Name_of_the_Item= soup.find('a', {'class":'item-title'}).get_text()
     print(Name_of_the_Item)
     price=soup.find('li', {'class':'price-current'}).get_text()
     print(price)
     Name_of the item = []
     Price_of_the item = []
     for soup in results:
       try:
          Name_of_the_item.append(soup.find('a', {'class':'item-title'}).get_text())
       except:
          Name_of_the_item.append('n/a')
       try:
          Price_of_the_item.append(soup.find('li', {'class':'price-current'}).get_text())
       except:
          Price_of_the_item.append('n/a')
     print(Name_of_the_item)
     print(Price_of_the_item)
     #Creating an example dataframe
     product_details=pd.DataFrame({'Name': Name_of_the_item, 'Price":Price_of_the_item})
     product_details.head(10)
 Table 6.
```

The resulting data frame or data items may be, e.g., a list, table, or database of the form {[item_name1, item_price1], [item_name2, item_price2],... }, or, for example {[ LenTPT14s_2022, $1005], [LenTPXs_2024B, $1500]}. Additional or alternative web scraping processes and techniques may be used in different embodiments.

A web scraping process according to some embodiments may include tagging or labeling items or item names/titles with item or product categories. In some embodiments of the invention, tagging items or products or associating items with item categories, e.g., as part of scraping a target website (such as for example, associating an item title "LenTPT14s_2022" with a category "laptop", or identifying the item or item title as referring to a laptop) may be performed using machine learning or artificial intelligence techniques.

Some embodiments may include determining, by a machine learning (ML) model, one or more tags for an item, wherein the ML model is trained using information linking item names to tags. In some embodiments, one machine learning model (may be referred to as a "first" machine learning model) may be used for predicting probabilities or likelihood values for quantities of items in a transaction, and another, e.g., different ML model (may be referred to as a "second" machine learning model) may be used for tagging items, or adding labels to items or outputting labels based on input item names or identifiers.

A nonlimiting example machine learning (ML) based item tagging process may include, supervised ML classification techniques. For example, products or items may be tagged or labeled (e.g., manually, by a human user) using predefined categories (such as, e.g., electronics, clothing, furniture, or laptops, shoes, produce, and the like) to train a classification model or ML model, e.g., using a supervised learning approach - such that for example the trained model may output classifications to inputs using the categories used for the training data. For example, a labeled training dataset may be of the form: {["LenTPT14s_2022", "Laptop"]. ["Nik_Runn_MiK32", "Shoes"], ...} where each item name or title is labeled with an item category. Some embodiments may include training a machine learning model on a training dataset of this form, e.g., to predict tags for product or item names scraped from a target website.

To predict labels for item names or codes, some embodiments may use a text classification model, leveraging deep learning techniques like Recurrent Neural Networks (RNNs) or Transformer-based architectures. For example, a transformer-based model, such as BERT (Bidirectional Encoder Representations from Transformers) or RoBERTa, may be used in some embodiments for text-based label prediction. These models may be fine-tuned using training datasets of historical data such as, e.g., provided herein, for the classification task, taking advantage of their ability to understand context and word relationships within item names and codes. Long Short-Term Memory (LSTM) networks may be used if computational resources are limited. Training data may include labeled item names or codes, with each entry labeled by category, type, or other tags (e.g., "shirt", "blue", "sale"). The data may be tokenized-splitting words or codes into smaller components, using tokenizers specific to the chosen model (e.g., WordPiece for BERT) and vectorized for input. The model may undergo fine-tuning, where it may learn to predict labels specific to items by adjusting the weights of the pre-trained language model. Training involves supervised learning, e.g., using a loss function such as a cross-entropy loss as the objective function to minimize errors between predicted and actual labels. Batch gradient descent and backpropagation may be used to optimize the model parameters. Data augmentation (e.g., synonym replacement, character shuffling) can improve the model's ability to generalize, especially for sparse or imbalanced datasets. The model's performance may be evaluated using metrics such as, e.g., prediction accuracy, precision, recall, and F1 score on a validation set. Hyperparameter tuning (e.g., adjusting learning rate, batch size, and the number of Transformer layers) may be performed to find the optimal configuration. Regularization techniques, such as dropout and early stopping, are applied to prevent overfitting, especially on small datasets. The model, once trained, may be used to predict multiple tags for a given item name or code by identifying contextual clues and semantic relationships, making it highly effective for automated, accurate item categorization in large datasets or catalogs.

In some embodiments, an item name or title of "Nik_Ten_Fed20" may be input to the model, and the model may output a prediction of "Shoes" as a product label or category for "Nik_Ten_Fed20".

An example supervised ML classifier training algorithm for a logistic regression type model, using the sklearn Python library for a set of items ["smartphone with camera", "cotton shirt", "wooden chair"] where each item is labeled using a tag or category ["electronics", "clothing", "furniture"], respectively, is provided in Table 7:

```
     from sklearn.feature_extraction.text import TfidfVectorizer
     from sklearn.linear_model import LogisticRegression
  
     # Sample training data (ideally, this would be much larger)
     descriptions = ["smartphone with camera", "cotton shirt", "wooden chair"]
     tags = ["electronics", "clothing", "furniture"]
  
     vectorizer = TfidfVectorizer()
     X_train = vectorizer.fit_transform(descriptions)
     model = LogisticRegression().fit(X_train, tags)
  
     # Tagging scraped product descriptions
     for product in data:
       X_test = vectorizer.transform([product["description"]])
              product["tag"] = model.predict(X_test)[0]
 Table 7.
```

Some embodiments may include determining, using a convolutional neural network (CNN), one or more tags of the plurality of tags for an item or items, wherein the CNN is trained using a plurality of image files or visual data.

For example, some embodiments may automatically determine tags, and label items or products on a target website using visual attributes from image data, like colors or patterns in images or image files associates with or describing items on a target website (which may be, e.g., scraped from the target website), for example through deep learning and computer vision algorithms and techniques. For example, convolutional Neural Network (CNN) may be used, often in combination with Transfer Learning and Object Detection models (e.g., as part of the "second" ML model used for tagging items). The process may begin by training a CNN-based model, such as, e.g., ResNet or VGG, which has been pre-trained on image file datasets, or on datasets including image files (e.g., images in RGB, .tiff, or .png formats, and the like) such as, e.g., the ImageNet dataset, and fine-tuning it on a custom dataset of product images labeled with desired attributes, features, or labels (such as, e.g., colors, patterns and/or labels predicted by a machine learning model for item names). For complex visual attributes, Region-based CNNs (R-CNNs) or YOLO (You Only Look Once) models may be used to detect and label specific regions or patterns within the product images. During training, the model or models may learn to recognize visual features corresponding to each attribute, e.g., by optimizing the model based on labeled training images (e.g., using a supervised learning approach including a loss function). Once trained, models such as, e.g., CNNs may classify or label new images describing, or associated with items (where the images may be, e.g., scanned or scraped from a target website) by generating predictions for, or determining relevant attributes or labels/tags. For example features or attributes such as, e.g., colors, additional color histograms and k-means clustering may be applied to detect and categorize dominant colors within images, further refining the labeling process. This setup may allow the model to predict labels such as, e.g., "red", "striped", or "polka-dotted" on product images automatically, which can then be integrated into a corresponding item or product database, and/or associated with product database entries, for automated tagging.

Additional attributes or categories that may be predicted or output by an ML model according to some embodiments may include, e.g., color, size, brands, and the like, based on item descriptions and/or images and/or tags and labels. Additional or alternative example labeling process and techniques may be used in different embodiments.

In some embodiments, web scraping and model training processes may include keyword extraction, for example using NLP techniques such as, e.g., TF-IDF, Named Entity Recognition (NER), or embedding-based models (such as, e.g., BERT, Word2Vec), to identify key product characteristics or attributes, such as titles or parts of titles which may appear many times in training data items and/or in content scraped from a website. Extracted keywords may be used as item or product labels or categories and may not require manual labeling e.g., by a human user.

Some embodiments may add tags to data items (where data items may be scraped from a target website and include, e.g., an item name or title and a price) according to the example process in Table 8:

```
     tagged_data = []
     for product in product_divs:
       description = product.find("p", class_="product-description").text
       X = vectorizer.transform([description])
       tag = model.predict(X)[0]
       tagged_data.append({
          "name": product.find("h2", class_="product-title").text,
          "price": product.find("span", class_="product-price").text,
          "description": description,
          "tag": tag
        })
 Table 8.
```

Some embodiments may identify or determine a plurality of tags associated with an item or items. In some embodiments, items or products on a target website may be pre-tagged, e.g., in cases where the target website already includes tags or item categories: this may be provided as a feature or requirement in some website building or e-commerce platforms, according to which a website owner or operator may provide tags to items, e.g., when building or configuring the website. =Additional or alternative web scraping and/or item tagging processes and techniques may be used in different embodiments of the invention.

Per user location, a process can classify amounts or costs of a combination of items in a transaction as a rating or category, for example:
- Normal
- Possible but unusual
- Not possible

In one example, a server operates a target website selling cloth, listing via a website operated by the server merchandise (A, B, C, D and E) that costs:
▪ A-$9.99, B- $12.99. C- $15.99, D - $19.99 and E- $24.99
▪ Shipping cost is $0, or $8 or $13
▪ Discounts are 5% or 8% (but only above $100)

A fraud analysis server different and remote from the server operating the website may access, e.g. scan or scrape, or download data or have data transferred from, the website to obtain the prices and calculate possible costs, to obtain, before shipping and discounts, for example:
▪ A- $9.99, B- $12.99, C- $15.99, 2A -$19.98, D- $19.99, AB- $22.98, AC - $24.98, E-$24.99, AC- $25.98, BC- $28.98,3A -$29.97, AD - $29.98. The fraud analysis server may obtain costs or amounts which are combinations of these costs or amounts associated with individual items A-E, for example by starting with zero as an initial value, then iteratively creating a subsequent value (e.g. from the lowest amount in the list of product prices), then creating the next value as the lowest number it can find by adding to one of the existing values thus far created (including zero) the value of A, B, C, D or E. It is quite possible that the combination that creates the number is not unique.

Next, for each combination, the fraud analysis server may calculate a possible addition of shipping costs. This may depend on what is offered, listed or sold at the server operating the website, the location of the user, and method of shipping (which produces more data to use in calculations). The cost may be calculated for the order as per the website instructions and may depend on the order and the order amount or cost. For example, shipping may be free above $500, or based on other website specific rules. If the order was for $X and there are three shipping modes, the different resulting costs may be $X, $X + $8.7 and $X + $13. In the case of a proposed transaction for an amount $Y having subcomponents $X1+$X2=Y, where X1 is the price of one product and X2 is the price of another product, then it is possible that a shipping cost depends on contents of the proposed transaction (e.g. the size, number of items, or other factors regarding the goods ordered). Thus, the transaction after adding shipping costs could be $Z= Y+ shipping (where shipping may be zero or another amount, e.g. $Z, $Z+$8.7 and $Z + $13 for the first item and $Z, $Z+$15 and $Z+$25 for the second (e.g. heavier) item.

Possible discounts may be calculated. For example, a process may apply rules which apply to the specific content of the order calculated, possibly with the specific shipping cost and coupon. For example, rules may flag "unusual" or possibly fraudulent orders such as:
a. Buying four items of a specific cloth or more will be considered unusual, in general unusual quantities for a product.
b. Slow shipping requested in an order for fresh products may be unusual, in usual type of shipping that is common to a product.
c. Fast shipping which increases the costs by a lot may be unusual, in general, unusual cost of shipping per order may indicate fraud.
d. Some coupon or no coupon for specific customers may be unusual, in general knowledge about customer use of coupons if the fraud analysis server has it.
e. Unusual product for the user's address, for example not kosher products ordered a neighborhood known to have a population largely keeping kosher, or items typically used by ethnic group A in a place where no such people are known to live.
f. Unusual combinations of goods ordered, for example, multiple football items from competing teams; items that the fraud analysis server knows (e.g. from learning) do not often go together (typically machine learning will do the opposite, study what does go together; machine learning in some embodiments of the invention may learn what does not go together).

A fraud analysis server may classify a transaction amount, or a transaction associated with a total cost being performed at a server e.g. operated by a merchant, for example based on the scanning or scraping and such example operations, according to categories, such as Normal (e.g. fraud unlikely); Impossible (e.g. fraud likely); and Unusual (e.g. possible fraud). One possible reason for an impossible, unusual, or fraud likely categorization may be that the merchant website has changed since a fraud analysis server last scraped it. Thus, one possible action is to preform another scrape after a determination of fraud (e.g., but before action is taken based on the analysis), to be sure of the analysis. Once finished, a fraud analysis server may give a fraud score based on scraping the merchant server or website and add it to other considerations of the transaction as a fraud.

A fraud analysis server may scan (e.g. access data on or scrape) target servers and thus scan target websites hosted by such servers, which may be operated by merchants. Scanning may be done periodically or in reaction to the receipt of a proposed transaction. Such scanning, scraping or access may provide the cost of all entities sold or offered by such servers; the cost of sending them (e.g. shipping). Based on this, a fraud analysis server can, for a specific order, calculate the cost of the order including all discounts and shipping. Consider two example cases:
▪ Online: a request to validate a transaction to take place is received by the fraud analysis server which calculates for the transaction the category or what is the probability that the transaction is a fraud based; and
▪ Offline -the fraud analysis server calculates for all reasonable transaction values for a specific target server or website, in advance, the probability of fraud based on the amount, e.g. to produce a table of transactions. When a request is received the fraud analysis server reviews its prior calculation for the target server (e.g. a table) and produces a fraud indicator, probability or rating.

In both example cases there may be a binary decision (e.g. strange value; acceptable value) or one of a set of values (e.g., Normal; Possible but unusual; Not possible) or a probability-based fraud or score with a higher probability of fraud making a higher fraud score.

In one embodiment, given the scraping or scanning to: identify possible products provided by the website; identify possible amounts for products; the scraping for discounts; and identify possible postages costs, a shipping cost determining algorithm may depend on what is ordered. For example, if the algorithm determines product is pizza the algorithm may calculate that if the cost is over $50, in a certain area delivery is free. The shipping cost may depend: on weight: e.g. if an algorithm determines the weight is over 15 pounds, a certain shipping cost may be determined. As a result of the scraping, a fraud estimation server may determine the weight for relevant products, and from this calculate the weight of the specific order.

In some embodiments, the scanning of a website may comprise executing a web scraping process, the web scraping process comprising triggering one or more dynamic internet browser events to reveal one or more hidden elements in the target website.

For example, to consider shipping costs and discount coupons during a web scraping process, some embodiments may extract or scrape additional fields on target website pages or checkout pages where relevant information may appear. Extracting these details may include, in some embodiments, navigating a plurality of HTML layers or triggering dynamic internet browser/JavaScript events to reveal hidden elements. For example, in addition to scraping an item's or product's basic information, such as name, price, and description, some embodiments may trigger dynamic internet browser or JavaScript events to, e.g., locate and extract shipping costs. In some nonlimiting example scenarios, shipping costs may be shown on a checkout page in the target website, or near an "Add to Cart" section on a product page, and may vary depending various factors such as, e.g., location, shipping method, and product type. Some embodiments may account for these scenarios or possibilities, e.g., by using:
- Static scenario: if the shipping cost is visible directly on the product page, it can be scraped using known HTML parsing methods (such as, e.g., using the beautiful soup Python library, in a manner similar to scraping item names and/or costs, using, e.g., an example Python command of shipping_cost = soup.find("span", class_="shipping-cost").text).
- Dynamic scenario: If the cost depends on location or other options, browser/JavaScript events may be initiated or triggered to display accurate costs in appropriate locations, e.g., by inputting different zip codes or addressed into the website, to display the relevant costs.
In the dynamic scenario (e.g., if shipping costs depend on user input (such as for example address/zip code)), automation tools such as the Selenium package for Python may be used for triggering or automating browser events, such as, e.g., an interaction with the website to enter a sample zip code and retrieve corresponding shipping costs. A nonlimiting Selenium-for-Python-based example for dynamic extraction of shipping costs is provided in Table 9:

```
     from selenium import webdriver
     from selenium.webdriver.common.by import By
     from selenium.webdriver.common.keys import Keys
     import time
  
     # Launch browser session
     driver = webdriver.Chrome()
     driver.get("https://example.com/product-page")
  
     # Locate and fill in the zip code field
     zip_input = driver.find_element(By.ID, "zipcode")
     zip_input.send_keys("12345")
     zip_input. send_keys(Keys.RETURN)
     time.sleep(3) # Allow time for the shipping cost to update
  
     # Extract updated shipping cost
     shipping_cost_element = driver.find_element(By.CLASS_NAME, "shipping-cost")
     shipping_cost = shipping_cost_element.text
     driver.quit()
 Table 9.
```

In a similar manner, some embodiments of the invention may use dynamic programming or automation tools such as the Selenium package for Python to locate and/or trigger and/or extract discount coupon information from a target website. A nonlimiting example for triggering a discount coupon pop-up in a target website using the Selenium package for Python is provided in Table 10:

```
     driver = webdriver.Chrome()
     driver.get("https://example.com/product-page")
     # Click on an element to trigger the coupon pop-up
     discount_button = driver.find_element(By.ID, "show-coupon")
     discount_button.click()
     time.sleep(2) # Allow time for the pop-up to appear
  
     # Extract coupon code
     coupon_element = driver.find_element(By.CLASS_NAME, "coupon-code")
     coupon_code = coupon_element.text
     driver.quit()
 Table 10.
```

Additional or alternative dynamic programming tools and algorithms for extracting varying cost components such as, e.g., shipping costs and discounts may be used in different embodiments of the invention.

For a given order received by a fraud analysis server (e.g. quantity Q1 of product P1, quantity Q2 of product P2, to be delivered or sent to location L, using discounts D1) an algorithm can calculate a total cost or an amount (e.g. the monetary amount of the transaction). One embodiment may assume restrictions, which may not always be correct. (An example algorithm to calculate possible costs, may be wrong from time to time, and there may be an indication in the scraping or data transfer from a target website for some cases when the algorithm is not relevant, for example if scraping reveals that a typical user may order any quantity or amount of a product, not only an integer amount or a fixed subset of integer amounts.). Such restrictions may include, for example:
▪ The number of products or product units ordered is a positive integer. A user may order 1, 2, ... N pairs of shoes but cannot order 1.56 pairs of shoes. The scraping server or algorithm may be aware of products for which this is not true (e.g., a user may order 1.56 pounds of raw pepper) and if it is possible to order a quantity or an amount which is not the integer for some of the products, this algorithm may not be used.
▪ The cost of delivery may be calculated per target website instructions. There could be multiple options depending on, for example, the ordering locations, and speed of delivery. Often, for a transaction, only few of them will be relevant as for a specific user order, the distance may be known.
▪ Discounts may be calculated for the target website (e.g., second item purchased receives a 50% discount); and/or an algorithm which can scrape for or otherwise identify coupons available via the internet.

Using existing or historical data scanned from a website that has been scraped and others, or otherwise provided from such websites, a process executed by a fraud analysis server such as server 210 may:
- Identify a plurality of products provided by each target website.
- For each product in a product category, determine what is a common or probable user order (e.g. a set of products) or purchase profile. This may be done by obtaining order history data from websites other than the target website, and/or the target website. Such order history data may have orders categorized by product type, e.g. "shoe" as opposed to specific models of shoes. For example, if the product in an order to be vetted is a shirt, it may be common for an order to include 1-4 of the same shirt; if it is a golf ball, it may be common for an order to include 1-20; if it is a shock absorber for a mountain bike, it may be common for an order to include 1-2. A fraud analysis server may automatically determine what the product category is (e.g. using machine learning (ML) model trained on previous information linking specific products to product categories, such that the ML model when receiving input for a specific product can output a classification to a product category), and for each category there may be a determined or deemed "normal" amount of units of product.
- Analyze a historical data of the size or number of units of the order measured in the number of different types of products in the order (e.g. in one case likely less than 5).
- Based on the scanning of the target website, calculate all possible costs for small orders, e.g., calculate a set of possible costs or amounts related to each of a set of transactions, each transaction including some combination of the number of units.
Additional operations may be included in different embodiments (see, e.g., additional nonlimiting example processes herein).

In some embodiments, the determining of the one or more combinations of items (e.g., using a subset sum algorithm) may be performed based on the cost for the transaction to take place at the target website not being found in a white list of transaction costs. For example, some embodiments may include calculating probabilities for possible transactions (e.g., small orders, such as for example combinations of single units or a threshold number of N units (e.g., N=2) of items among the plurality of items offered on the website) and implementing a white list for high-probability transactions. Relevant transaction features, such as item tags, quantity, and total cost, may be extracted and fed into a trained model that may output a probability score indicating the likelihood that the transaction is legitimate. For possible small, frequent orders, thresholds may be adjusted to account for the typical patterns of genuine, low-risk purchases. If a transaction surpasses a high-confidence threshold (e.g., 90% likelihood or 0.9 probability of legitimacy), its amount may added to a white list-a database or cache that may store transaction attributes, allowing the system, for example, to bypass additional checks or calculations (such as, e.g., running a computationally costly subset sum algorithm or machine learning based probability prediction) for similar future transactions. Each white list entry may be managed with an expiration time or usage limits to ensure ongoing accuracy and security. When a new transaction arrives, the system may check for a whitelist match of its total cost or amount, and, if found, the system may process the transaction as verified or non fraudulent; otherwise, e.g., if the cost or total transaction amount for the transaction to take place is not found on the white list, the transaction may proceed with full verification steps (e.g., including subset sum algorithms or machine learning based probability prediction). This approach may improve computational efficiency and may reduce verification times, e.g., for consistently safe, high-probability transactions. According to some embodiments, a white list may include a plurality of transaction costs that may be automatically considered valid or non-fraudulent. A nonlimiting example white list of valid costs is provided in Table 11:

**Table 11.**

| **Whitelist ID** | **Total Cost** | **Expiration Date** |
|---|---|---|
| 001 | $15.00 | 2024-12-18 10:05:22 |
| 002 | $8.99 | 2024-12-18 12:32:45 |
| 003 | $5.50 | 2024-12-18 13:15:10 |
| 004 | $12.00 | 2024-12-18 14:47:00 |
| 005 | $10.00 | 2024-12-18 16:02:30 |

Additional or alternative white list formats may be used in different embodiments.

Historical or past data regarding, for example, the size or number of units in order; the numbers of different products in mixed orders; and other past order information may be obtained from various sources, for example from servers operated by merchants, or third parties which collect and provide or sell such data. An organization operating a fraud analysis server may pay for such data, or, since a fraud analysis server may be operating a fraud detection service, such data may be provided from merchants that work with the fraud analysis server.

Some embodiments may collect historical data describing transactions where items and/or numbers of items bought may be associated with labels or tags. In some embodiments, historical data may comprise one or more past transactions associated with tags describing items. A nonlimiting example data structure describing historical purchases or transactions that may be included and/or used in some embodiments of the invention is provided in Table 12:

**Table 12.**

| **Transac tion ID** | **Da te** | **Vendor** | **Item Name** | **Quan tity** | **Amo unt ($)** | **Tags/Lab els** |
|---|---|---|---|---|---|---|
| TX001 | 20 24-11-18 | AzuraS hop | Wireless Ergono mic Mouse | 1 | 25.99 | Electronic s, Discount: 10% off, Color: Black, |
| TX002 | 20 24-11-18 | WallyM art | Cotton Crew T-Shirt | 2 | 15.00 | Brand: ErgoTech Clothing, Discount: Buy 1 Get 1, Color: White, Brand: ComfyWe ar |
| TX003 | 20 24-11-18 | TargetP lus | Oak Coffee Table | 1 | 129.9 9 | Furniture, Material: Wood, Style: Modern, Color: Natural Brown, Brand: HomeFit |
| TX004 | 20 24-11-17 | TradeCi rcle | Smartph one Cover | 1 | 12.49 | Accessori es, Color: Transpare nt, Material: Silicone, |
| | | | | | | Brand: TechGuar d |
| TX005 | 20 24-11-17 | HomePr o | LED Light Bulbs (6-pack) | 1 | 19.99 | Home Improvem ent, Discount: 20% off, Color: Warm White, Brand: BrightLig ht |
| TX006 | 20 24-11-16 | BestTec h | Noise-Cancelli ng Headph ones | 1 | 199.9 9 | Electronic s, Color: Silver, Style: Over-Ear, Brand: SonicClea r, Discount: $20 off |
| TX007 | 20 24- | ArtisHo me | Handma de | 1 | 45.00 | Home Decor, |
| | 11-16 | | Ceramic Vase | | | Material: Ceramic, Style: Bohemian , Color: Blue, Brand: VaseCraft |
| TX008 | 20 24-11-15 | NikaSp orts | Trail Running Shoes | 1 | 89.99 | Footwear, Color: Gray/Red, Brand: SprintRun , Discount: 15% off, Size: 10 |
| TX009 | 20 24-11-15 | BulkHo use | Organic Almond s (2 lbs) | 1 | 14.89 | Groceries, Type: Organic, Packaging : Resealabl e Bag, Brand: |
| TX010 | 20 24-11-14 | PearSto re | Pro Laptop Charger | 1 | 79.00 | NutHarve st Electronic s, Compatibi lity: Universal, Brand: LapCharg e, Color: White |

Where different fields may describe or correspond to, for example:
- Transaction ID: Unique identifier for the transaction.
- Date: Date of purchase.
- Vendor: Name of the website, store or service provider.
- Item Name: Name or description of the purchased item.
- Quantity: Number of units purchased of the item in the transaction.
- Amount or cost ($): Total amount paid.
- Labels/tags: Includes, for example:
   ∘ Category (e.g., Electronics, Clothing).
   ∘ Discounts (percentage or fixed value).
   ∘ Color of the item.
   ∘ Material (where applicable, e.g., wood, ceramic).
   ∘ Style (modern, casual, bohemian).
   ∘ Brand (fictional brand names).
   ∘ Additional details (e.g., packaging, compatibility).
Additional or alternative data structures and/or fields or labels may be used in different embodiments of the invention.

Based on historical transaction data such as for example provided in Table 12, some embodiments may include training and using a machine learning model to predict or output a plurality of probabilities, each probability corresponding to a quantity or number of items for a label or combination of labels being input to the model. For example, for the input combination or set of tags/labels describing an item ["shirt", "men", "blue", "discount: two for one"], a machine learning model according to some embodiments may predict a plurality of probabilities such as, e.g., (0.3, 0.6, 0.07, 0.03), which may mean that model may predict a probability of 30% that 1 item may be purchased in a single transaction for the combination of tags input to the model, a probability of 60% that 2 items may be bought, a probability of 7% that 3 items may be bought, a probability of 3% that 4 items may be bought, and a null or zero probability that 5 or more items associated with the combination of tags will be bought or purchased in a single transaction.

Some embodiments of the invention may include, predicting, by a machine learning model, a likelihood value for a quantity of an item, wherein the predicted likelihood value is indicative of whether the quantity of the item is common in historical data, wherein the predicting of the likelihood value comprises inputting a tag describing the item into the machine learning model.

To train and use a machine learning (ML) model for predicting likelihood values or the probability distribution over the quantities, or number of units, that may be purchased for a given set of item tags (or for one or more tags describing an item), some embodiments may follow the example steps and considerations such as:
- Historical data (such as, e.g., illustrated in Tabel 12) may be used as training data for a machine learning model. To make it suitable for training, the data may be subject to preprocessing. Features such as, e.g., tags or labels (inputs) may be encoded into a format usable by ML models. In this context, labels or tags may be represented using multi-hot encoding or embedding-based representations for tags describing an item such as, e.g., "shirt," "men," "blue," etc. Numeric features such as, e.g., "discount: two for one" may be encoded as numerical variables, for example, one-hot encoding the discount type or including numerical values where applicable. For example, input tags ["shirt", "men", "blue", "discount: two for one"] may be represented as a feature vector [1, 0, 0, ..., 1, 1, 1, ..., 1, 0, 0]. The target (output) may represent the quantity as a one-hot or categorical variable, where, for instance, Quantity 1 maps to [1, 0, 0, 0] and Quantity 2 maps to [0, 1, 0, 0]. The model's probability predictions will match these categories. Historical transaction data may include diverse examples and ensure that each label combination has a range of quantities.
- Several example machine learning models may be used for this task. For example, logistic regression with SoftMax may map input features to probabilities for each class (quantity). Gradient Boosting models, such as XGBoost, LightGBM, or CatBoost, may provide particularly effective for tabular data may directly handle both categorical and numerical features, particularly when relationships between features and outputs are non-linear. Neural networks such as for example deep neural networks (DNNs) may be used for high-dimensional or complex datasets. An example DNN architecture may include, for example, embedding layers for categorical tags, followed by dense layers to learn patterns and a final output layer with SoftMax activation to produce a probability distribution over quantities. Transformer models may be applied in cases where textual descriptions are used as input, leveraging pre-trained embeddings for better context understanding.
- The training procedure may involve using a loss function, such as, e.g., categorical cross-entropy loss to calculate the error between predicted likelihood values or probabilities and actual one-hot encoded targets (such as for example purchased quantities or numbers of items in the training data). Evaluation metrics like accuracy, log loss, and precision/recall may be used to measure model performance. Regularization techniques, such as L2 regularization or dropout, may help prevent overfitting. Hyperparameter tuning may be used for optimizing model performance, including learning rates, tree depths, and dropout rates. In such manner, likelihood values or probabilities output by the model may reflect or may be indicative of whether quantities of the item are common in the historical data used for training the model.
Additional or alternative example ML model training procedures and considerations may be used in different embodiments.

According to some nonlimiting embodiments, an example Python-TensoFlow based implementation of a neural network for predicting probabilities or likelihood values for quantities, amounts or numbers of an item that may be purchased in a transaction based on an input tag or combination of tags - where predicted likelihood values may be indicative of whether the quantities are common in historical data - may be described in Table 13:

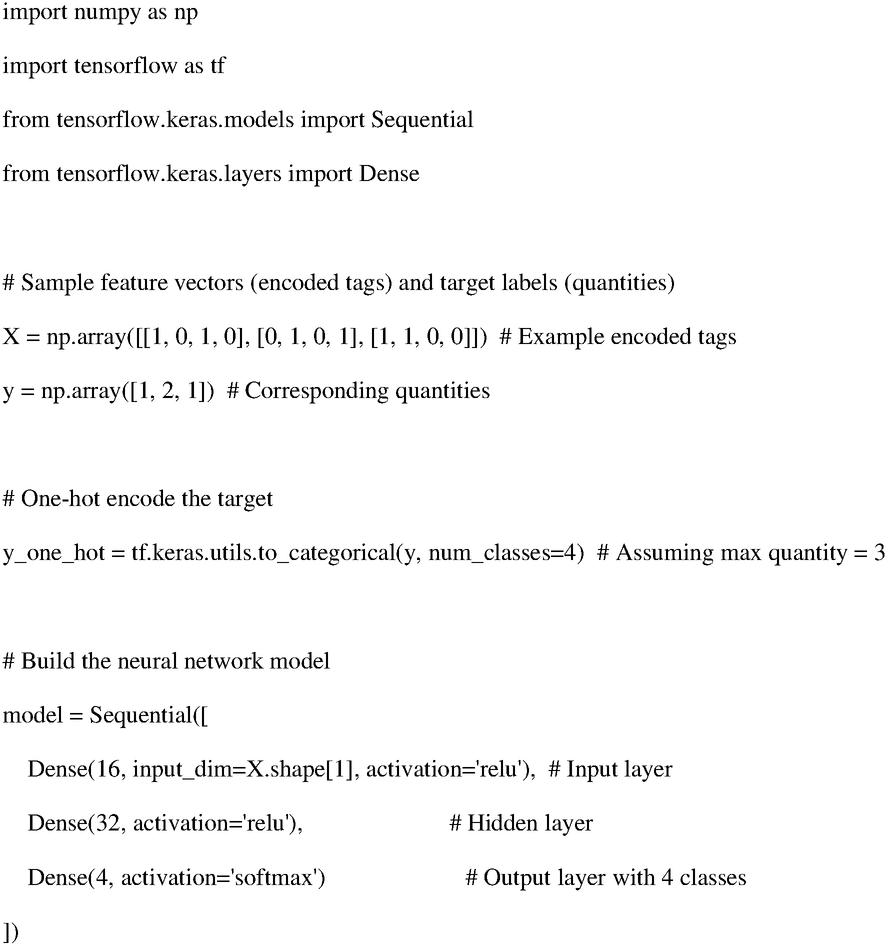

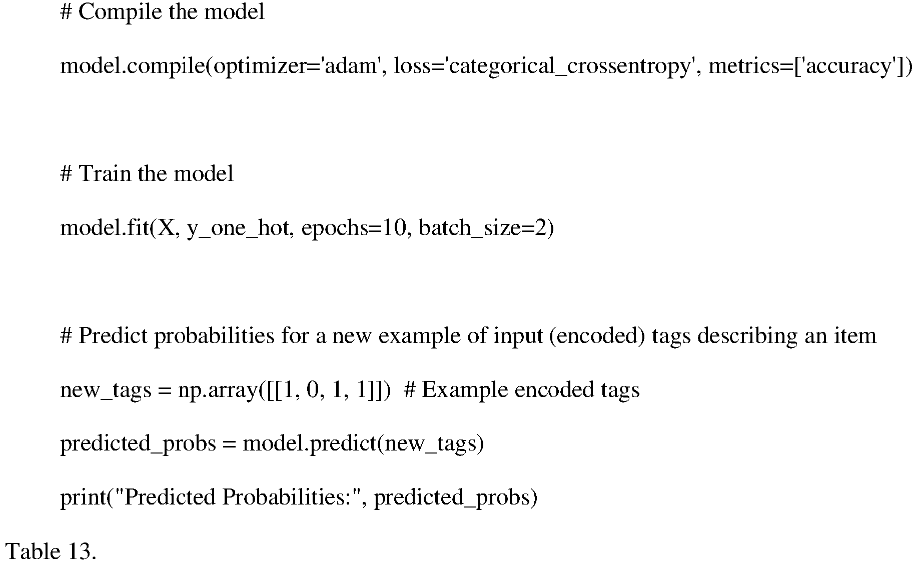

Additional or alternative implementations may be used in different embodiments.

The model may output probabilities or likelihood values for each quantity or numbers of an item items may be purchased in a single transaction. For instance, given input tags describing an item ["shirt", "men", "blue", "discount: two for one"] (which may for example be themselves determined by a machine learning model according to some embodiments as illustrated in Table 13), a ML model according to some embodiments (e.g., a model different from the model used for determining tags for items) may output probabilities in a dedicated data structure or table such as, e.g., described in Table 14:

**Table 14.**

| **Quantity** | **Predicted Probability** |
|---|---|
| 1 | 0.30 |
| 2 | 0.60 |
| 3 | 0.07 |
| 4 | 0.03 |

Which indicate a 30% chance that a quantity or 1 item, or 1 unit of an item, will be purchased, a 60% chance for a quantity of 2 items (which may be likely, e.g., due to the "two for one" discount), and lower probabilities for higher quantities. Additional or alternative output data structures may be used in different embodiments.

In some embodiments, the quantity or number of items for which the highest probability was calculated or determined, a probability above a threshold (e.g., of T=0.7) may be considered a "common" or "normal" quantity or amount in a single transaction for an item described by a combination of tags or labels. A probability below a threshold (e.g., of T=0.3) may be considered uncommon. Additional or alternative criteria for classifying probable or improbable quantities of items in a transaction may be used in different embodiments.

Embodiments may detect from which target website a user is attempting to perform a transaction or order, and only use scraped or transferred data from that target website. However, data from websites other than the target website may be used: for example, discount data. A common user order may be determined for example, based on data from the target website or multiple websites, e.g. websites from servers or merchants that are willing to share the actual order information such as number and type of products, and prices, with a fraud analysis server (e.g. server 210) ; from this data, and using the category or type of each product, a process may determine a common number for each product.

For example, based on the target website scanning, a process may calculate a set of possible amounts, quantities, and/or costs related to each of a set of possible transactions. Such a process may execute in conjunction with (e.g. just after) a scraping operation, in reaction to updated data from scraping; thus such a process may execute periodically, and/or in response to a new proposed transaction and/or in response to a change in a target website. An example algorithm (e.g. carried out by a fraud analysis server) may calculate if there are combinations of items with costs or values V1...Vn that sum to, or equal a specific amount or cost. Such an algorithm may operate on one target website (e.g. operated by web server 250); results from each of a number of different target websites (e.g. different merchants) may each be saved separately. A goal of an embodiment may be to check amounts or costs from 0 to a target amount upper limit, e.g. $1,000, which may, e.g., be a limit such that almost all transactions at the target website are less than this amount). While certain example currencies and other parameters are used, in other methods other currencies may be used. Table 1 shows an example algorithm to generate a set of possible amounts for a target website:
Initialize V, an Array of size N to be the initialized to values of each good or service that is sold at a target website (e.g., in cents), for example, V[1] = 120, V[2] = 699 ... V[14] = 6999
Create an array A with Size in dollars * 100 places. Each may represent the possible cost or amount of a transaction or order in cents, so for example, 100.46 or $100 plus 46 cents is location 10046 in the array (e.g. 100*100+46).
Initialize array A to zero (all amounts not valid)

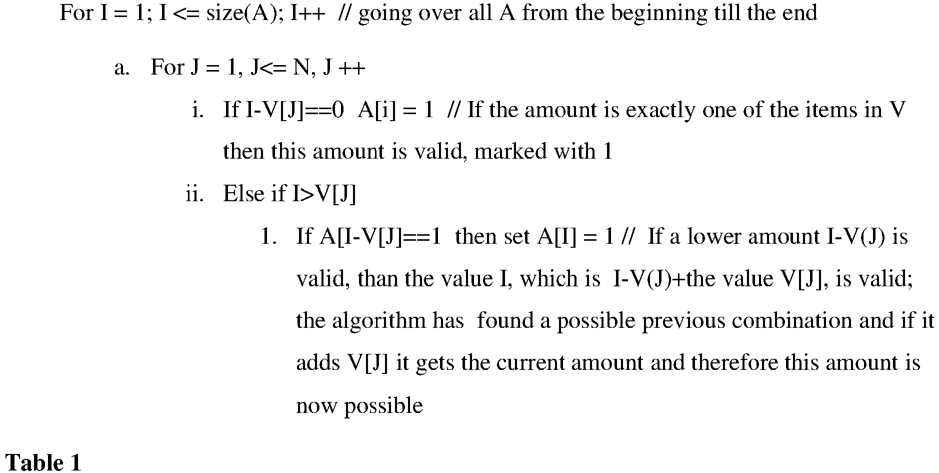

The result of the algorithm in Table 1 may be that for every cost or amount there is an indication 0, if the cost or amount not a combination of the values (e.g. if not a combination of costs of goods which make up a theoretical order or transaction in the target website), and 1 if the amount is a combination of some values in the target website. If it is not a combination of values, A[I] for that value is zero, then a transaction or order for that website having that value should be assigned a strong indication of fraud. Shipping costs may be taken into account by, e.g. iterating over array A of valid prices, and if A[x] =1 (is a valid combination of prices), then setting A(x+shipping cost)=1, for the various possible shipping costs.

In one example, an algorithm as in Table 1 may execute as follows, shown in Table 2:
Assume the values are 99, 500, 999 (99 cents, 5 dollars, 9 dollars and 99 cents)
Create array V [99, 500, 999]. N = size(V) = 3
Assume the algorithm is to check all the values up to an example limit of $100 to see if possible.
Create an array A of size 10000 and initialize to zero // $100x100 cents

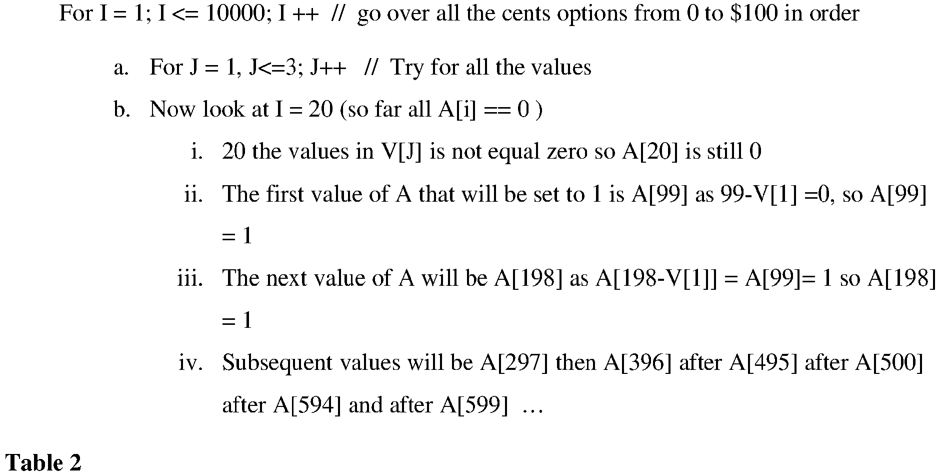

At the end of the example calculations shown in Table 2, there are possible and not possible values. However, this is a simplified case in which there could be as many items as desired of each sold entity. An embodiment may be limited to, for example, only four shirts (otherwise it may be an indication of fraud). In this case what can be used is a version of the positive number subset sum algorithm. The subset sum problem is that a subset A of n positive integers and a value sum is given, and the algorithm may find whether or not there exists any subset of the given set, the sum of whose elements is equal to the given value of sum. In one embodiment, if there is a website that sells 10 types of items, each of which has a value, an embodiment may determine if a specific cost or amount can be the sum of subset of the items for sale. Elsewhere herein it is described how to solve the problem if there can be any number of copies from each item. Table 3, below, provides an algorithm to determine valid prices for combinations of goods offered by a target website in the case that the number of certain goods possible to be sold is limited to some values (for example 1-5). In one embodiment using a recursive method, the subset sum problem can be divided into two cases, such as in the following, e.g., to find if a list of items is a valid list, use recursion to remove one item from the list, then figure out if the remaining list is valid, by repeating the process of removing another item. An example algorithm may, e.g.:
Include current element in subset and recurse the remaining elements within remaining sum. That is, choose to include the element, reduce it from the sum and continue recursively.
Exclude the current element from subset and recurse for remaining elements. That is, decide not to include the current element.
Finally, return true if the algorithm obtains subset by including or excluding current item else we return false.
The base case of the recursion may be when no items are left or sum becomes negative. Return true when sum becomes 0, e.g., subset is found. Many subsets may be found.

Example pseudocode for partial sum limiting the number of certain goods to certain specific values (e.g. 2, 3, or 4 pairs of shoes) is in Table 3, below:

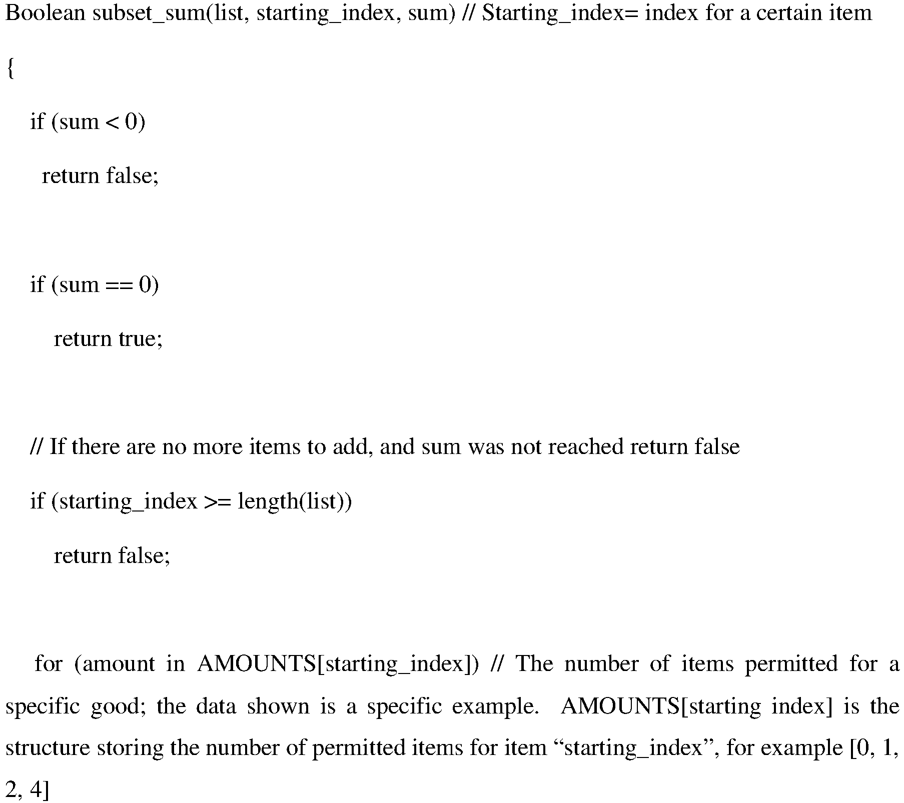

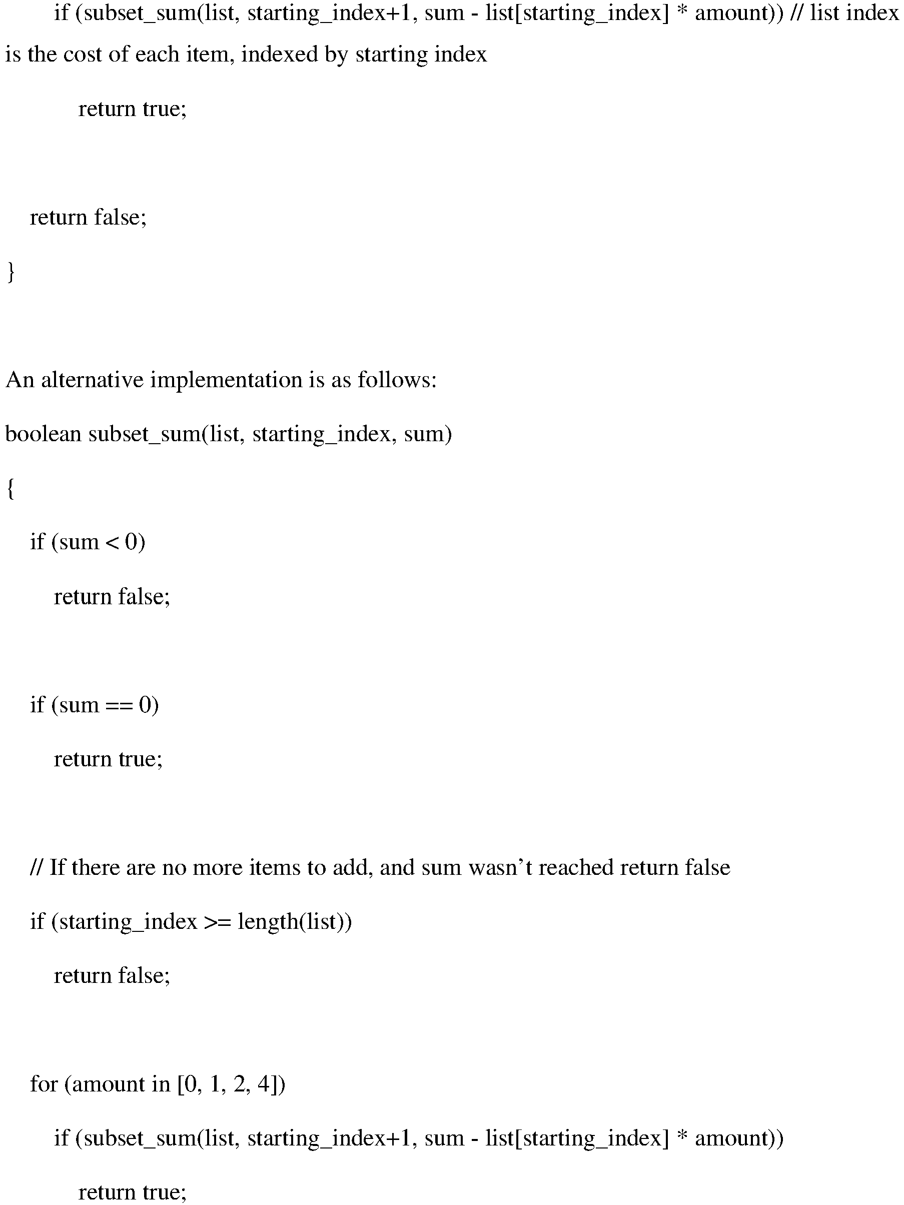

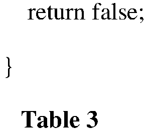

According to some embodiments of the invention, subset sum algorithms may be used to determine what overall costs are possible. For example for items A and B costing $3 and $7, respectively, and , possible total costs for transactions including any quantity or number of each of items A and B may be are $3, $6, $7, $9, $10, $12, $13, $14, $15... and after the like. Some embodiments may assume restrictions on the number or quantities of items, e.g., only 2 items of product A may be purchased in a single transaction, which may affect or alter the result of what total cost for a transaction including a combination of products A and B may be possible.

The example subset sum code in Table 3 creates actual possible transaction amounts, with limits on the number of each specific good that can be in a possible transaction. Shipping costs may be added in ways described elsewhere herein; e.g. post processing such that for all prices X being a valid price, adding to the result a valid price of X+shipping. In one example, there are four options for item 12 (e.g., shoes for example), meaning that a person may buy 0-4 shoes. Another vector may be used for each item in the starting index indicating how many a user can buy (e.g. an upper limit); such a limit may be taken from historical data. Alternatively, there can be a vector of possible amounts people buy (e.g., 2, 5, 6, 7) and alternatively minimum and maximum amounts. Embodiments may use various ways of recording for each item how many a person could buy. In one example, for three items the upper limits are 1, 2, and 4. The modification of the algorithm in Table 3 for such a case is that there are (option+1) recursions where options are the number of different amounts. For example, the various amounts may be 1, 2, 4 (or actually 0, 1, 2, 4 as a person may decide not to buy). Table 4 below shows pseudocode which may perform a subset-sum calculation, as in Table 3, but limiting the number of times some items may be used (e.g. limiting certain items to 2, 4 or 6 in a transaction, as these are purchased in pairs). In this case the following step of the algorithm:
if (subset_sum(list, starting_index+1, sum - list[starting_index] * amount))
return true; is changed to:
boolean result_1 = subset_sum(list, starting_index + 1, sum - list[starting_index);
boolean result_2 = subset_sum(list, starting_index + 1, sum);
return result_1 | result_2;
There is an array [0,1,2,4] of length options+ 1, for every item (index will be the starting index); the number of options for an item are the number of amounts for that item + 1, since zero is an option.
A result may be:

**Table 4**

| |
|---|
| For options = 1 ; options ++, length[starting_index] [array] |
| boolean result_1 = subset_sum(list, starting_index + 1, sum - list[starting_index) * array [options]; // start a recursion with buying that many of this item. So instead of reducing the cost, reducing the multiple of cost that is possible as detailed in the array. For example, cost is 10.99$ and possible multiple is 4 so reduce 43.96 from the sum and continue the recursion |
| At the end, return result_1 \| result_2 ...\| result_length[array] |

Table 4 provides an example recursive solution to this problem, producing a list of amounts that are considered valid transaction amounts for a target website. Dynamic programming may be used alternatively as well. The output of an algorithm as in Table 4 may be an indication, for each of a number of prices, if each of a list of prices could be created by choosing items from a target website.

Some embodiments may include determining, by a computer processor, one or more combinations of one or more items, wherein a cost for each of the determined one or more combinations equals a cost for a transaction to take place at a target website. In some embodiments, the determing of one or more of the combinations may include recursively solving a subset sum problem.

An example Python implementation (using the itertools Python module) of a subset sum algorithm for calculating combinations of items is provided in Table 15. In this example implementation, a cost for the determined combinations (such as, e.g., a sum of the costs for all items in a given combination, which may include multiple units of a given item in a combination) - may sum up to, or may equal a total amount or threshold value (such as for example a total cost (e.g., in USD) for a pending transaction or a transaction to take place at a target website and being examined for fraud). Nonlimiting example subset sum algorithms according to some embodiments may work as follows:
- Use recursion (or iteration) to explore all subsets of item costs.
- Check which subsets sum up to the given total cost.
- Return the subsets that match the total cost, if any.
from itertools import combinations

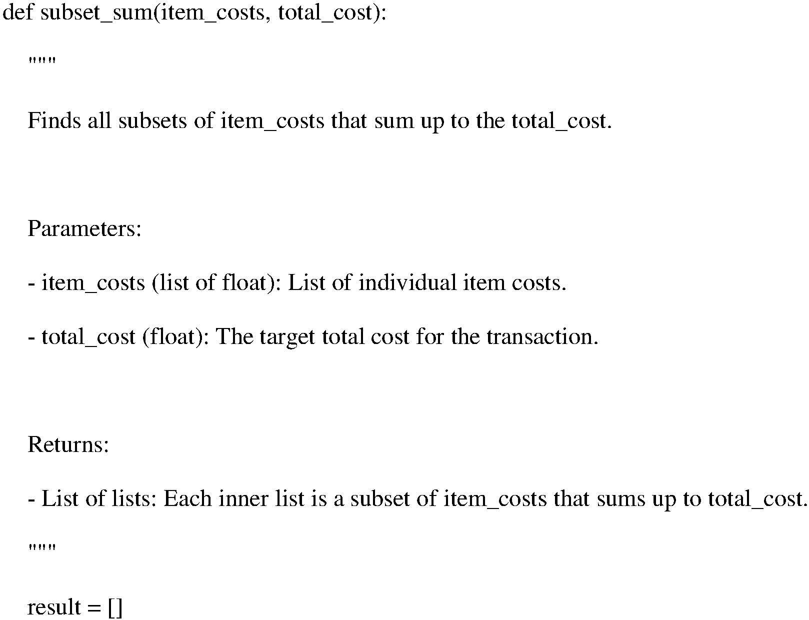

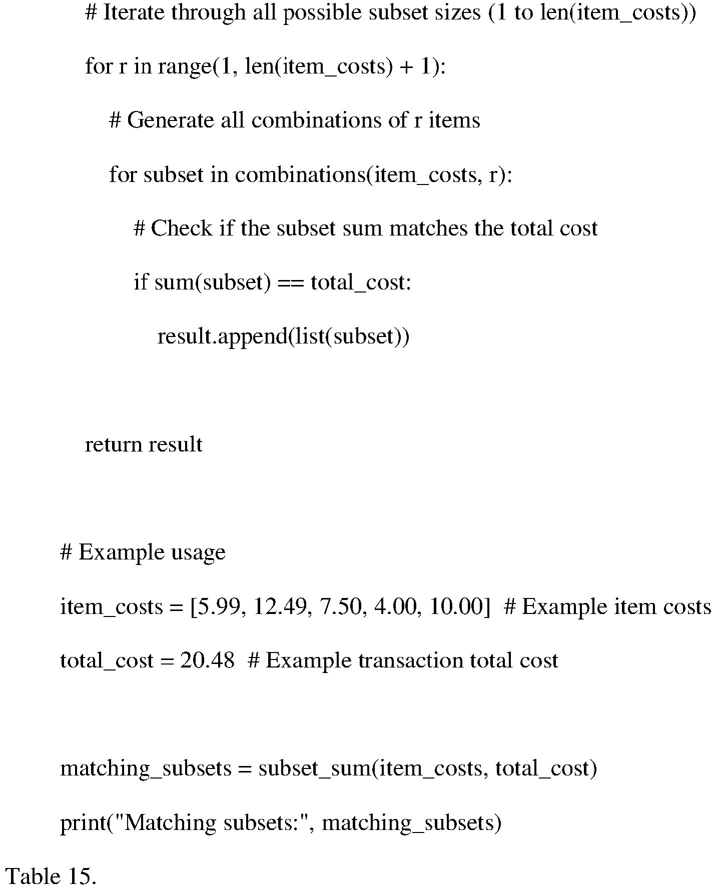

Which may include, e.g.:
1. Inputs:
   o item_costs: A list of item costs or prices in the transaction.
   o total cost: The total cost or amount of the incoming or input transaction, or of the transaction to be validated (e.g., a transaction to take place at the target website).
2. Processing:
   o Using itertools.combinations to generate or determine all possible combinations or subsets of item_costs.
   ∘ For each combination or subset, calculating its sum or total cost or amount.
   ∘ If the sum equals total_cost, adding the combination or subset to the result list.
3. Output:
   ∘ Returning or determining a set or list of one or more subsets or combinations whose sum of costs equals total_cost.
For example, given the input:
- item_costs = [5.99, 12.49, 7.50, 4.00, 10.00]
- total_cost = 19.99
Some embodiments may produce an output of:
- Matching subsets: [[7.50, 12.49], [10.00, 5.99, 4.00]]
Which may indicate that there are two possible combinations of items that total or that are equal to $19.99 - which may be the total cost of a transaction to take place at the target website being examined for fraud. See additional nonlimiting examples for subset sum algorithms including different constrains, e.g., in Tables 1-4 herein. Additional or alternative subset sum algorithms and implementations may be used in different embodiments.

In some embodiments, if there is a discount related to items, for example if one item costs 50 cents but two 90 cents, then in the recursion the sum-cost may reflect it with the cost being the cost of the two items and not the cost of one item multiply by two. If there is a coupon, which may or may not be used, there may be two recursions with different costs of the same two items, one with the coupon and one without it.

Algorithms may determine if an cost or amount (e.g. in an order or transaction) is possible or probable or not, which may include taking into account that the number of copies from each item may be limited, and also discount. Shipping can be added to the price to create additional prices: thus by altering prices of goods and services by shipping, shipping costs or shipping address may be taken into account (e.g. by adding costs of shipping to different shipping addresses to create additional possible prices). For example, if after an algorithm finishes, the first part the shipping may cost $0, $3 or $5 depending on a customer's desired priority. An algorithm may take the list of possible amounts of combinations of items and create a new list by adding possible shipping amounts for each amount, e.g. adding for example $0, $3, and $5 in shipping costs to it. If the possible amounts previously were $43, $86, and $95 now they are $43 $46, $48, $86, $89, $91, $95, $98 and $100 by taking into account shipping cost after doing the previous calculation. Thus, shipping and/or discounts may be taken into account by adjusting the prices of legitimate of probable transactions (or adding to the list of valid prices adjusted prices), such that when the cost of a proposed transaction is compared to a list of costs for legitimate transactions, the cost of the proposed transaction matching or not matching to a precalculated cost provides an authentication score.

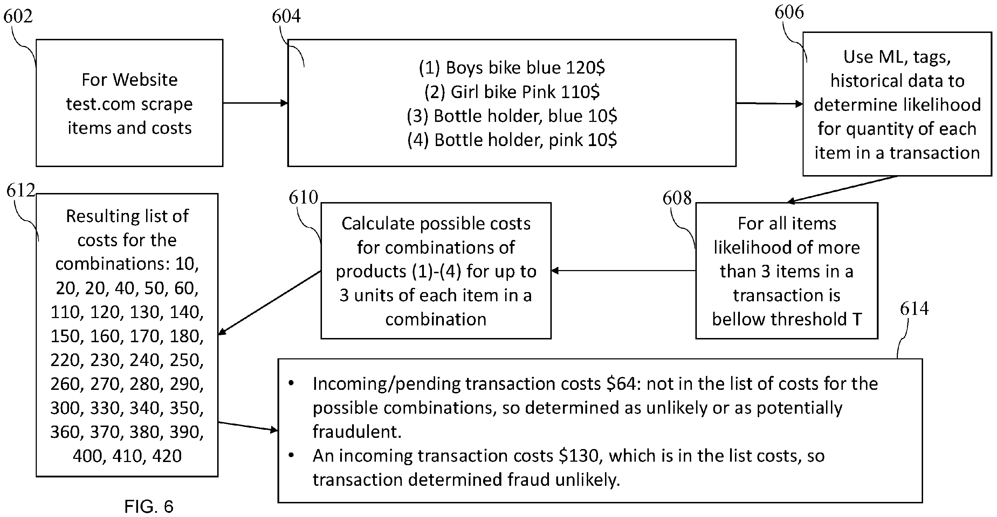

Fig. 6 shows an example process of analyzing internet transactions according to some embodiments of the invention.

Some embodiments may scrape items (a), (b), (c), (d), and their costs from a target website (operations 602-604), and use tags for the scraped items and/or historical data to determine likelihoods for different quantities or numbers of units of the items being included in a single transaction using appropriate machine learning algorithms (for example, a likelihood that 3 units of item (a) are included in a single transaction - see nonlimiting machine learning algorithms described herein; operation 606). In a nonlimiting example case where the calculated likelihood values or probabilities for more than 3 units of each of items (a), (b), (c), (d) is below a threshold (for example, if the likelihood value or probability of >4 units of (a)-(d) in a transaction is below T=0.4) - some embodiments may calculate and/or determine a list of total costs for all possible combinations of item amounts for up to 3 units of each of items (a)-(d) (operations 608-612). For an incoming/pending transaction to take place at the target website, some embodiments may check if the total cost for the incoming/pending transaction equals at least one of the calculated costs on the list calculated in operation 612. If the cost for the incoming/pending transaction is not on the list and does not equal any cost or value on the list, some embodiments may determine that the incoming/pending transaction is fraud likely, or likely to involve fraud; conversely, if the cost for the incoming/pending transaction is on the list or matches a value found on the list, some embodiments may determine that the incoming/pending transaction is fraud unlikely, or unlikely to involve fraud. Additional or alternative operations may be performed in different embodiments (such as, e.g., scraping/calculating shipping costs for combinations of items, and the like).

In some embodiments, a neural network such as for example a multilayer perceptron (MLP) can be used to predict the likelihood of different quantities of items being included in a single transaction. An MLP may be trained on historical transaction data, where input features may include item tags (such as e.g., "shirt," "discount: two-for-one"; see nonlimiting example in Table 12), to produce outputs such as, e.g., probabilities for each quantity (e.g., 1 item, 2 items, etc.). Additionally or alternatively to other training procedures described herein as nonlimiting examples, training of an NN may include, for example, supervised learning with a softmax activation in the output layer to predict probabilities and/or a categorical cross-entropy loss function to train/optimize the model and its prediction accuracy (which may be used, for example, with a training dataset such as for example shown in Table 12, which may, for example, be further manually labeled to include probability or likelihood values for different quantities of items in an order, and for the tags/labels of the relevant item. For example, a probability or likelihood value of 0.9 for 2 units of an item associates with tags "Clothing, Discount: Buy 1 Get 1" may be assigned to TX002, e.g., by a system administrator for training a NN generating probability or likelihood values for item quantities based on tags; see also additional description of nonlimiting examples in Tables 13-14), and/or using backpropagation and a gradient descent optimization method or algorithm such as for example the Adam stochastic optimization technique. Additional or alternative models, NNs, and training/optimization procedures may be used in different embodiments.

Instead of having a zero-one binary fraud indication, a process may determine a probability or other number, for example between zero and one, where one indicates fraud (this amount cannot be proper) and zero indicates no suspicion at all, and anything in between can be used as an indicator of more or less suspected fraud.

Embodiments may calculate for each possible amount or transaction (e.g. based on a combination of different types of product units, e.g., shoes and socks) a probability that the combination of product units (where the "combination" may include only one product, or more than one) associated with the amount at the website or merchant is a legitimate transaction. Probability that a proposed transaction having a certain amount is legitimate may be calculated, for example, based on rules, each rule corresponding to a pre-assigned probability. This may be the amount_option.probability used elsewhere herein. A set of rules may be used for, or correlating to, each of a number of ranges of amounts of products to assign a probability that the amount of products, if seen in a transaction, is legitimate. For example below are specific examples where for a given amount for any product a process calculates, using historical data on similar websites as described above, amount_option.probability for that amount.

For example: if a common quantity, number or amount of goods (in the historical data) of a specific description (e.g. a certain type of shoe) purchased in a transaction from a target website is e.g. 1-3 at once assign probability 1 for proposed transactions that have these amounts (where "common" may be a certain percentage of transactions or order above a threshold). The amount of goods may be taken into account for example using code in Table 4, which produces lists of valid transaction amounts, the list produced using valid combinations of goods. If a less common amount (e.g. fewer occurrences of 4-5 shoes in the historical data) assign or deem probability .9 (where "uncommon" may be a certain percentage of transactions or order below a threshold); In another example, if a number of the goods is not in the historical data and is 1-2 away or "off" from values in the historical data, deem it more uncommon, and assign or deem probability .7. For values that do not appear in historical data but are close to values having high probability (e.g. 5-6 of the specific goods), deem even more uncommon assign or deem probability .5. This may be done, in some embodiments, by specifying that if the number of units X is within a threshold (e.g., one our two units away) from a quantity or number of items Y with a known or already-calculated probability P(Y), and if the number is greater than a threshold number or quantity T (e.g., T=5 units for a given item) - , then a value being half of P(Y) or 0.5P(Y) may be used for number of units X. For example if the probability for purchasing 1 unit of product A in a transaction was determined as 70%, and a probability of purchasing 2 units of product A in a transaction was determined as 30%, e.g., using an ML model trained using labels associated with historical data and/or transactions, some embodiments may not automatically determine a probability of 0.5*30%=15% for purchasing 3 or 4 units of product A in a transaction, since the number of units considered is smaller than a threshold of 5 units. However, if probabilities were determined as 45% for 1 unit, 25% for 2 units, 10% for 3 units, 10% for 4 units, and 10% for 5 units of product A, some embodiments may automatically assign or determine a probability of 0.5*10%=5% for purchasing 6 or 7 units of product A in a single transaction. Additional or alternative operations for automatic determinations of probabilities based on known probabilities may be used in different embodiments. If not in the historical data and are not close to values having high probability, assign or deem the probability of 0 that a proposed transaction having an amount of goods resulting in the 0 probability is legitimate.

Another process may start with product amounts given probability 1, and for every standard deviation outside this norm amount, reduce the probability by a percentage, e.g. 20%.

Rules may be applied to include exceptions, such as an exception if the buyer is also a store (which may be determined from the transaction itself) then set the probability the transaction is legitimate at 1.

In general, an authentication score or probability discussed herein indicates fraud or service agreement violation the closer the value is to 0; and indicates legitimate the closer the value is to 1. However, other embodiments may use different scales, and may reverse the 0-1 scale so that the higher the value, the likelier fraud. Probabilities assigned to rules may be learned by looking at previous buying where the data (e.g. held by the fraud analysis server) on similar goods, analyzing what is common, uncommon, and so forth. An embodiment may ignore in such learning transactions between two merchants. The following pseudo code in Table 5 produces the probability or authentication score for each of a set of proposed transactions (each including a combination of product units, e.g. a certain number of product units of a certain type), using an input, e.g. an amount_option.probability as described elsewhere herein. Thus the output of an example algorithm as in Table 5 may be an authentication score (e.g. a probability that the transaction is fraud) for each of a number of transactions for a target website:
float subset_sum(list possible_items, int starting_index, float sum) // Input is a transaction amount (float sum), output is an authentication score, where the higher the authentication score, the more likely the transaction is good; this example function uses amount_option_probability as described elsewhere herein.

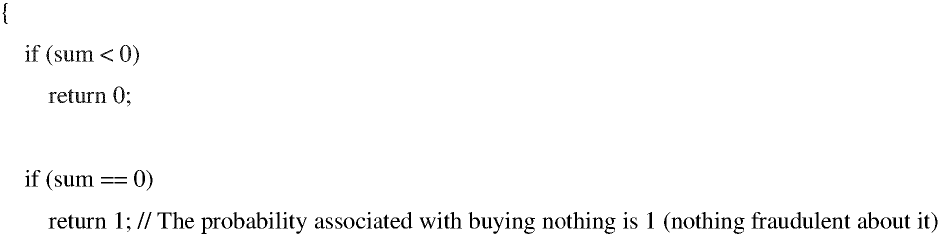

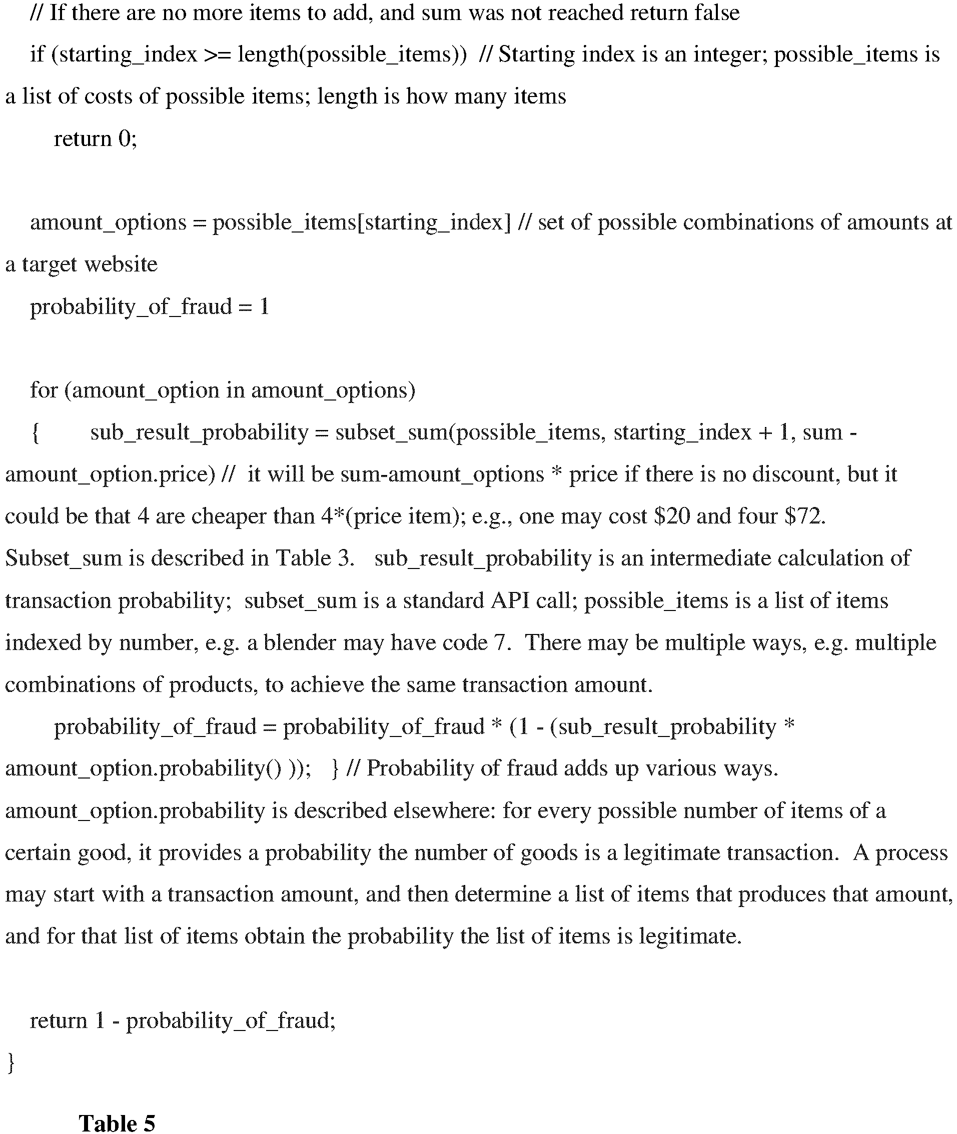

The input to a process as in Table 5 may be the output of a process such as Table 4, and in addition various permissible combinations of goods. The process in Table 5 may for each of a number of transaction amounts figure out combinations of goods get to that amount, using for example the output of Table 4. If there is no way to get to that amount a transaction having that amount is not likely (e.g. low authentication score); if there is a way to achieve the amount which is not common the authentication score is low. If there are many ways to get to transaction sum, including a low probability way and a higher one, then the resulting transaction score is higher: each of the components of small likelihood when together create a higher likelihood amount. Shipping may be factored in by modifying possible transaction amounts, as described elsewhere herein. In the example algorithm in Table 5, the probability of fraud or authentication score is the combined probability of different items resulting in fraud: e.g., all amounts common, the authentication score is high, and if some are uncommon, their probabilities are multiplied. For example, if the authentication score/probability for 4 shoes is .9 and that of 10 shirts is the result may be 0.9*0.5 = 0.45.

Some of the algorithms described herein may be computationally costly and may use hardware acceleration (e.g.,. distributed processing and memory systems, and the like) for being executed in realistic timeframes (which may not be achieved, e.g., by generic or personal computer equipment for target websites including a large variety of items and corresponding possible costs). In some embodiments, some of the algorithms (e.g., ML prediction and subset sum algorithms) may be executed, for example, whenever the target website is modified, which can be multiple times a day.

Some embodiments of the invention may combine a subset sum algorithm with a machine learning model for predicting common numbers or quantities of items (e.g., given input tags or labels) to form a system for fraud detection. The process may involve breaking down a transaction amount (e.g., of an incoming or newly received transaction) into plausible item combinations using a subset sum algorithm, and associating these combinations with the probabilities of the predicted item quantities. The resulting probabilities and mismatches in expected behavior may provide the basis for calculating a probability of fraud for a given transaction.

Some embodiments of the invention may include, for each of the items in each determined combination, predicting, by a machine learning model, a likelihood value for a quantity of the item in the determined combination (see, e.g., step 2 in Table 16, and corresponding operations in Table 17 showing an example calculation of an authentication score or a probability of fraud, and Tables 13-14 showing example predictions of likelihood values for a quantity of an item in historical data using input tags for the item); and generating, by the processor, a probability of fraud (e.g., for the transaction to take place at the target website) based on one or more of the predicted likelihood values (see, e.g., steps 3-4 in Table 16, and corresponding operations in Table 17, providing a nonlimiting description of calculating likelihood values or probabilities for each combination of items based on likelihood values predicted for each item in a combination, and aggregating likelihood values calculated for different combinations to generate a probability of fraud or authentication score for a transaction).

A nonlimiting example process or algorithm for calculating an authentication score or probability of fraud based on a subset sum algorithm and a machine learning model for predicting common numbers or quantities of items is provided in Table 16:

### Process Overview

### Inputs:

1. A transaction amount in USD (T) (which may be, e.g., an amount in USD of an incoming/pending transaction, newly received transaction, or transaction to take place at the target website).
2. A list of items with prices and associated tags (which may be, e.g., results of a web scraping process describing all items offered for sale at the target website and/or provided as predictions by, e.g., a corresponding machine learning model for determining tags using item names or identifiers).

### Step-by-Step Process:

- Check if the transaction amount is in a white list; if so, mark transaction as valid or not fraud likely. If not -
- Use the subset sum algorithm to compute or find all plausible combinations of item costs (e.g., from point 2) that sum to T.
- For each subset (combination of items), use the tags of corresponding items associated with each of the costs in the subset to generate or predict probabilities or likelihood values for the number of items, or units of each item, being purchased in a single transaction using a machine learning model (where the machine learning model may be trained to predict probabilities for the quantities of items based on tags received as inputs; see nonlimiting examples in Tables 13-14).
- Calculate a probability score for each combination or subset based on the agreement between the predicted probabilities and the quantities in the subset.
- Aggregate the scores across all subsets and compute or generate a fraud probability for the transaction.

### Detailed Steps

**Table 16.**

| Step 1: Subset Sum Algorithm | | | |
|---|---|---|---|
| | Given: | | |
| | | • item_costs: List of item prices (e.g., [5.99, 12.49, 7.50, 4.00, 10.00]). | |
| | | • T: Transaction amount (e.g., 19.99). | |
| | | Use the subset sum algorithm to compute or find all possible subsets/combinations of items and corresponding item_costs that sum to T. The result may be a list of subsets, where each subset represents a plausible decomposition of the transaction into item costs. | |

| Step 2: Apply the Machine Learning Model | | | |
|---|---|---|---|
| | For each subset: | | |
| | | • Extract the tags associated with each of the items in the subset. | |
| | | • Use the machine learning model to predict probabilities or likelihood values (see, e.g., nonlimiting examples in Tables 13-14) for the quantities of the items based on their tags. | |
| | | • For example, for a subset with items described using tags, such as, e.g., Item 1 = ["shirt", "men", "blue", "discount: two for one"] and Item 2 = ["pants", "women", "red"], the ML model may predict or output: | |
| | | | ∘ Item 1: [P(1) = 0.3, P(2) = 0.6, P(3) = 0.07, P(4) = 0.03] |
| | | | ∘ Item 2: [P(1) = 0.4, P(2) = 0.5, P(3) = 0.1, P(4) = 0.0] |

| Step 3: Compute Subset or Combination Scores or Likelihood Values | | | |
|---|---|---|---|
| | | • For each subset/combination, calculate a subset or combination probability score or likelihood value that, e.g., reflects how well the predicted probabilities for each item in the combination align with the observed quantities in the subset. | |
| | | For a subset containing n items: | |
| | | | 1. Let the observed quantities in the subset be [q₁,q₂,...,qₙ]. |
| | | | 2. The probability of the subset may be defined as: |
| | | (eq. 1) P(subset)= ΠPᵢ(qᵢ) | |
| | | | where Pᵢ(qᵢ) is the predicted probability for the observed quantity qᵢ of item i. |
| | | | 3. If an item in the subset has no plausible prediction for its observed quantity (e.g., Pᵢ(qᵢ)=0), assign a low or zero probability to the subset or flag it for further inspection. |

| Step 4: Aggregate Scores | | | |
|---|---|---|---|
| | | • Combine scores across all subsets to calculate the overall likelihood that the transaction is valid or probability that the transaction is fraudulent. For example: | |
| | | • Normalize the predicted likelihood values or scores of all subsets to sum to 1, representing a distribution of likelihoods for plausible subsets. | |
| | | • A fraud probability or authentication score may be defined based on the predicted likelihood values and/or may be generated as, e.g.: | |
| | | | (eq. 2) P(fraud)=1-max(P(subset)) |
| | | | Which assumes that higher agreement between predicted probabilities and observed quantities reduces the likelihood of fraud. |

| Step 5: Threshold and Decision | | | |
|---|---|---|---|
| Set a threshold for P(fraud) to determine whether the transaction is flagged as fraudulent. For example: | | | |
| | | • P(fraud)>0.7: High risk of fraud. | |
| | | • P(fraud)≤0.7: Medium risk, flag for review. | |
| | | • P(fraud)<0.3: Low risk. | |

A nonlimiting example calculation of a probability of fraud or authentication score is provided in Table 17:

**Table 17.**

| | | |
|---|---|---|
| Inputs: | | |
| Item Costs: [5.99, 12.49, 7.50, 4.00, 10.00] | | |
| Transaction Amount (e.g., for an incoming transaction or transaction to take place at the target website): 19.99 (not on a white list) | | |
| Example ML Model Predictions of Likelihood Values: | | |
| | For item 1 (e.g., tagged as "shirt"): | |
| P(1 item) = 0.4, P(2 items) = 0.5, P(3 items) = 0.1 | | |
| For item 2 (e.g., tagged as "pants"): | | |
| | | P(1 item) = 0.6, P(2 items) = 0.3, P(3 items) = 0.1 |
| Subset Sum Output: | | |
| Using a subset sum algorithm, the subsets of item_costs that may sum to, or may equal the transaction amount 20.48 of the incoming transaction may be: | | |
| | | 1. [7.50, 12.49] |
| | | 2. [10.00, 5.99, 4.00] |
| Probability Score or Likelihood Value Calculation for Subsets | | |
| Subset 1: [7.50, 12.49] | | |
| The quantities in this subset are: | | |
| | ∘ q1 = 1 (1 unit of the $7.50 item) | |
| | ∘ q2 = 1 (1 unit of the $12.49 item) | |
| Using the ML model: | | |
| | For item 1: Likelihood value=P1(1 item) = 0.4 | |
| | For item 2: Likelihood value=P2(1 item) = 0.6 (based on the ML model predictions for the relevant tags). | |
| The subset probability may be calculated as: | | |
| P(subset) = P1(1 item) × P2(1 item) = 0.4 × 0.6 = 0.24 | | |
| Subset 2: [10.00, 5.99, 4.00] | | |
| The quantities in this subset are: | | |
| | | ∘ q1 = 1 (1 unit of the $10.00 item) |
| | | ∘ q2 = 1 (1 unit of the $5.99 item) |
| | | ∘ q3 = 1 (1 unit of the $4.00 item) |
| Using the ML model: | | |
| | For item 1: Likelihood value=P1(1 item) = 0.4 | |
| | For item 2: Likelihood value=P2(1 item) = 0.6 | |
| | For item 3: Likelihood value=P3(1 item) = 0.7 | |
| | (based on the ML model predictions for the relevant tags). | |
| The subset/combination likelihood value or probability of fraud may be calculated as: | | |
| P(subset/combination) = P1(1 item) × P2(1 item) × P3(1 item) = 0.4 × 0.6 × 0.7 = 0.168 | | |
| Aggregate and Fraud Probability Calculation | | |
| Normalize the subset/combination probabilities to calculate the fraud probability: | | |
| • Total subset score = 0.24 + 0.168 = 0.408 | | |
| Normalize each subset or combination likelihood value or score: | | |
| • Subset 1 normalized score = 0.24 / 0.408 ≈ 0.588 | | |
| • Subset 2 normalized score = 0.168 / 0.408 ≈ 0.412 | | |
| Combination probabilities or scores may be aggregated, and a final fraud probability or authentication score may be generated or calculated as: | | |
| P(fraud) = 1 - max(P(subset)) | | |
| The maximum subset probability, or the highest normalized score calculated for one of the subsets is 0.588>0.412, so: | | |
| P(fraud) = 1 - 0.588 = 0.412 > 0.3(threshold for low risk) AND <0.7 (threshold for high risk). | | |
| Conclusion: | | |
| • The calculated subsets of item costs are [7.50, 12.49] and [10.00, 5.99, 4.00]. | | |
| • Based on the calculated probabilities and predefined thresholds, the probability of fraud or authentication score indicates moderate risk or, e.g., that the transaction is somewhat suspicious, with a fraud probability of 0.412. The transaction may be flagged as potentially fraudulent. (for different scores/values and based on different thresholds, some embodiments may take different automated actions, such as, e.g., blocking or enabling the transaction) | | |

Additional or alternative example algorithms for calculating a probability of fraud or authentication scores may be used in different embodiments.

The resulting authentication score can be combined with other factors, such as rule-based factors, e.g., is the merchant operating at unusual hours or is the payee suspicious.

Some embodiments may include removing or not considering combinations of products that meet predefined conditions or criteria. For example, after a subset sum algorithm is executed to find combinations of products for which the total cost equals the total cost or transaction amount of an incoming or pending transaction (e.g., step 1 in Table 16), some embodiments may remove combinations of products including prespecified quantities of a given product or item of a given type or label (e.g., 8 or more units of an item associated with a tag "shirt") from subsequent steps of the fraud detection algorithm (e.g., prediction of probabilities for number of items in the combination by an ML model, etc.). In some embodiments, conditions and/or criteria based on which combinations may be removed or not considered in subsequent steps of the fraud detection algorithm may be stored in a database of conditions and criteria, which may be, e.g., of the form [("tag", logical_operator, quantity), ...]. A nonlimiting example database entry may be, e.g., [("shirt", >, 8)], which specifies removing subsets in which there are more than 8 items associated with the tag "shirt" from subsequent steps of the fraud detection algorithm (this combination removal step may offer savings in computational cost for the overall algorithm).

In some embodiments, and for example in addition and/or instead of using multiplications of item probabilities in the calculation of a subset probability (e.g., Step 3 in Table 16, see corresponding example calculation in Table 17), the minimum probability or the minimal likelihood value for the items in a combination or subset may be used as the subset score or probability. For example, for a subset of item costs [7.50, 12.49], and quantities of: q1=(1 unit of the $7.50 item, or item 1) and q2=(1 unit of the $12.49 item, or item 2), and given that an ML predicts: Likelihood value=P1(1unit of item 1) = 0.4, Likelihood value=P2(1 unit of item 2) = 0.6 - some embodiments may use P1, being the minimum value calculated for the items/quantities in the subset or combination (due to the fact that P1=0.4<0.6=P2), as the probability of fraud for the relevant subset or combination. Additional or alternative operations may be used in addition to or instead of multiplying probabilities in calculating likelihood values for subsets or for combinations of items according to different embodiments of the invention.

The example pseudocode and algorithms of, e.g., Tables 16-17 may produce one value based on one value input. such that a transaction having an input value X is given a probability of legitimacy, e.g. an authentication score. Thus inputting transaction amount X into the code of Table 5 will produce an authentication score for the transaction amount for a target website. Embodiments may calculate an authentication score or probability score (e.g. a likelihood of fraud) of an amount for a proposed or new transaction to take place at a target website or order to be executed on a target website, using amounts for possible transactions or orders for the target website. For example: a process may determine for a number of different target websites, as described for example with example algorithms in Tables 1-5 and elsewhere herein, and a proposed order or transaction to take place for one of those target websites may be received, at, e.g. a fraud analysis server, which may determine which target website the order or transaction to be vetted is for, and compare the order or transaction to the data for the target website. For example, using the recursive algorithms as described in Tables 1-5 and elsewhere herein, there may be determined an amount or other information for different transactions for a target website, e.g. an indication that it could not happen, or a list of possible options for a transactions (e.g. as in N1 of item X1 and N2 of item X2 with discount and some shipping). For example, transaction possibilities for a target website could be:
Transaction on amount $99.87: cannot happen;
Transaction on amount $99.88 has three options:
   Three shoes of type Denim with $3 shipping
   Bicycle with $5 shipping
   55 golf balls of type X, 23 Hershey kisses combinations, with $5 shipping.

An embodiment may calculate a probability score for each of the possible transactions, and then a combined score, where the combined score may be better or equal then the best component score (e.g. if there are multiple possible transactions that could result in transaction amount X, the authentication score for amount X is higher than the component possible transactions). From the combined probability score a process may calculate a fraud indicator.

In one embodiment, based on the probability score of each individual combination, a process may use the independent probability to create the probability that one of them actually happened. For example, if the probabilities for three options were .7, .2 and .3 (expressed on a scale of 0-1) the combined probability may be 1 - (1-.7)(1-.2)(1-.3) which is higher than any of the probabilities of each individual mean for achieving this score.

In one embodiment, to calculate the probability of a single option, when calculating a recursion (e.g. as shown in Tables 3 and 4), conditions may be added (e.g., a number of items possibly with some discount) whenever we add an item is added to the list. A process may create, based on historical data of sales from a target website, a list of probability for each item type (e.g. amount_option.probability) and the number of items taken. If it is a number deemed normal (e.g. 1-3 for cloth) this probability may be one; for numbers of items that are lower probability, the assigned probability may be reduced according to rarity. For example, 9 items of cloth may get a probability of 0.45 (45%) based on an historical analysis of purchases determining it is very rarely seen. The rarer an event is (e.g. the fewer of a certain combination of goods in the historical sales data for a target website) the lower will be its probability score. The exact decision of the probability score may be determined or adjusted by calibration: for example in one calibration embodiment, previous probability data created (e.g. using Tables 1-5) may be analyzed in light of actual transactions matching the probability data, and the probabilities may be adjusted based on actual transactions which were or were not found to be fraudulent. This may be done, for example, using a learning algorithm, search algorithm, or a probability assignment algorithm, or by parameter fitting.

Embodiments of the invention may allow a server to detect fraud or service agreement violations. An embodiment may allow for a first entity operating a server which operates with a second server, e.g. operating a target website, to ensure that a violation of a service agreement or fraud is not conducted by, for example the second server allowing transactions to take place on that website which are a cover or front for transactions via a third website, where such transactions via the third website may violate a service agreement between the first entity and the entity operating the second server. The first entity may not want to transact with the third website, e.g. an unapproved merchant, due to for example a high level of chargeback risk, or undesirable products being offered by the third website. For example: a server A may act as a credit card clearance site for a target website operated by server B (e.g., an approved merchant), and the agreement between the entities operating server A and server B may be that certain types of transactions, or certain products or services, are forbidden. Server B may allow a server C (e.g., operated by an unapproved merchant) to effectively use server A as a credit card clearance site for server C by charging an amount as being transacted using server B without any goods or services being actually sold by server B, thus violating the service agreement or committing fraud, by allowing B to make a fake transaction on server B (e.g. a target website). Server B obtains the funds from server A, keeps a "commission", and sends the remainder of the funds to the organization operating server C. The real purchaser - obtaining goods or services from server C - may receive a charge on its credit card statement from server B. Embodiments of the invention may allow server A to detect fraud or service agreement violations, by recognizing transactions unlikely to be taking place.

The computational cost of some fraud detection algorithms according to some embodiments of the invention may scale with several factors, primarily due to the subset sum problem and machine learning prediction steps, For example:
- The subset sum problem may have exponential complexity, specifically O(2^n), where n is the number of items in the list of items, or in item_costs (see Python implementation). For each transaction, the algorithm may generate all possible subsets of item prices to find combinations that match the transaction amount, which may become computationally expensive as n grows. For larger transactions or product lists, optimized approaches (such as dynamic programming) may reduce this to, e.g., pseudo-polynomial time, O(n * T), where T is the transaction amount.
- Calculating probabilities for each combination of item quantities and tags involves invoking a machine learning model, which may add a time complexity of O(m), where m is the number of features (such as tags and quantities) input to the model. If a neural network or ensemble model is used, this cost may further increase depending on the model's depth and width. However, for most transactions, this may be relatively low compared to the subset sum problem. That being said, model training may prove computationally costly.
- Whitelist lookups (e.g., to spare a calculation of an authentication score or probability of fraud using the subset sum problem and machine learning model) may have O(1) time complexity if implemented with hash tables or efficient caching. Managing the whitelist with, e.g., expirations and usage limits may add some additional overhead, likely O(k), where k is the number of whitelisted entries to check for expirations.

Assuming p is the probability prediction complexity and q is the whitelist checking complexity, the total complexity may be approximately 0(2^n + p + q), which simplifies to O(2^n) due to the exponential nature of the subset sum. Consequently, fraud detection algorithms according to some embodiments may become computationally demanding as the number of items grows, necessitating optimizations like caching and dynamic programming for subset sums, and careful management of whitelist operations.

In addition, the computational complexity of predicting labels for items using a deep learning model like a CNN as, e.g., described with regard to some embodiments may scale with the input image size width(W)×height(H) (in pixels), the number of layers L, and the number of filters F, with the overall complexity being approximately O(L * W * H * F + C), where C is the number of output labels. For batch processing, this complexity may scale linearly with the batch size (B), resulting in O(B * (L * W * H * F + C)).

This clearly shows that the computational cost associated with using some embodiments of the invention to detect fraudulent transactions performed on websites including more than a small number of unique items (e.g., more than 15 items) may be formidable using generic or personal computer equipment; some embodiments may therefore require non-generic hardware equipment such as, e.g., hardware acceleration.

According to some embodiments, a process or method for detecting internet fraud may be executed using a hardware-accelerated computer system.

For example, to make fraud detection algorithms according to some embodiments of the invention feasible for large-scale websites, various hardware accelerators may be used to optimize key processes like subset sum calculations and probability predictions. NVIDIA GPUs (e.g., A100 or V100) may be used, e.g., to handle the parallel processing demands of subset sum combinations and accelerate machine learning inference for probability scores, significantly reducing computational time. For dedicated machine learning tasks, Google TPUs (e.g., TPU v4)m optimized for fast matrix operations, may be used for real-time fraud detection models in cloud environments. Customizable FPGAs such as Xilinx Alveo U50 may be programmed to perform the subset sum operations efficiently and may reduce the exponential costs of these calculations. ASICs (e.g., Google's Edge TPU or Intel's Movidius MyriadX) may provide high-speed, energy-efficient processing for both subset sum and model inference but are best suited for specialized deployments with consistently high transaction volumes. For handling large data throughput, these accelerators may be deployed in clusters or through distributed cloud solutions like AWS EC2 P4 instances (for NVIDIA GPUs) or Google Cloud TPU pods, enabling horizontal scaling to meet high transaction volumes in real-time.

Some embodiments of the invention improve computer technology, such as, e.g., computerized fraud detection technology, by providing a robust technological and algorithmic framework allowing fraud detection systems to perform real-time fraud or anomaly detection. Some embodiments thus improve both the speed and accuracy of computerized anomaly and fraud detection technology, allowing for more refined risk scoring, and reducing the likelihood of false positives, while simultaneously increasing the scalability of fraud detection systems for large-scale, high-volume platforms - in a manner that would not be possible to achieve in the absence of dedicated technological algorithms and the appropriate technological infrastructure (including, e.g,. appropriate hardware acceleration).

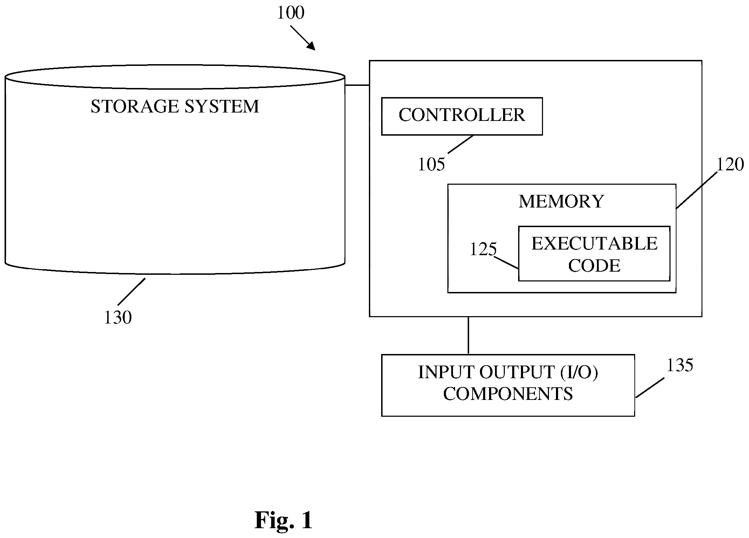

Reference is made to Fig. 1, showing a non-limiting, block diagram of a computing device or system 100 that may be used to detect fraud according to some embodiments of the present invention. Computing device 100 may include a controller 105 that may be, or may include, a hardware controller. For example, computer hardware processor or hardware controller 105 may be, or may include, a central processing unit processor (CPU), a chip or any suitable computing or computational device. Computing system 100 may include a memory 120, executable code 125, a storage system 130 and input/output (I/O) components 135. Controller 105 (or one or more controllers or processors, possibly across multiple units or devices) may be configured (e.g., by executing software or code) to carry out methods described herein, and/or to execute or act as the various modules, units, etc., for example by executing software or by using dedicated circuitry. More than one computing devices 100 may be included in, and one or more computing devices 100 may be, or act as the components of, a system according to some embodiments of the invention.

Memory 120 may be a hardware memory. For example, memory 120 may be, or may include machine-readable media for storing software e.g., a Random-Access Memory (RAM), a read only memory (ROM), a memory chip, a Flash memory, a volatile and/or non-volatile memory or other suitable memory units or storage units. Memory 120 may be or may include a plurality of, possibly different memory units. Memory 120 may be a computer or processor non-transitory readable medium, or a computer non-transitory storage medium, e.g., a RAM. Some embodiments may include a non-transitory storage medium having stored thereon instructions which when executed cause the processor to carry out methods disclosed herein.

Executable code 125 may be an application, a program, a process, task or script. A program, application or software as referred to herein may be any type of instructions, e.g., firmware, middleware, microcode, hardware description language etc. that, when executed by one or more hardware processors or controllers 105, cause a processing system or device (e.g., system 100) to perform the various functions described herein.

Executable code 125 may be executed by controller 105 possibly under control of an operating system. For example, executable code 125 may be an application that validates monetary transactions or associates monetary transactions with a score as further described herein. Although, for the sake of clarity, a single item of executable code 125 is shown in Fig. 1, a system according to some embodiments of the invention may include a plurality of executable code segments similar to executable code 125 that may be loaded into memory 120 and may cause controller 105 to carry out methods described herein. For example, units or modules described herein, e.g., fraud analysis server 210, web servers 210, 250 and 260, scraper process 212, crawler processes 214 and user device 240 shown in Fig. 2, may be, or may include, controller 105, memory 120 and executable code 125.

Storage system 130 may be or may include, for example, a hard disk drive, a CD-Recordable (CD-R) drive, a Blu-ray disk (BD), a universal serial bus (USB) device or other suitable removable and/or fixed storage unit.

Storage system 130 may store data objects such as files, database tales, digital data structures, computer data objects etc. may enable storing, retrieving and modifying data relevant to embodiments of the invention such as website data, scraped data, rules, transactions, etc. Each of these objects may include fields that can be set or cleared, parameters for which values can be set, entries that may be modified, etc. For example, details related to specific monetary transactions, e.g., amounts, combinations of products and so on may be recorded.

Content may be loaded from storage system 130 into memory 120 where it may be processed by controller 105. For example, monetary transactions data may be loaded into memory 120 and used for authenticating, validating or scoring transactions as further described herein.

I/O components 135, may be used for connecting (e.g., via included ports), or they may include: a mouse; a keyboard; a touch screen or pad or any suitable input device. I/O components may include one or more screens, touchscreens, displays or monitors, speakers and/or any other suitable output devices. Any applicable I/O components may be connected to computing device 100 as shown by I/O components 135, for example, a wired or wireless network interface card (NIC), a universal serial bus (USB) device or an external hard drive may be included in I/O components 135.

A system according to some embodiments of the invention may include components such as, but not limited to, a plurality of central processing units (CPU) or any other suitable multi-purpose or specific processors, controllers, microprocessors, microcontrollers, field programmable gate arrays (FPGAs), programmable logic devices (PLDs) or application-specific integrated circuits (ASIC). A system according to some embodiments of the invention may include a plurality of input units, a plurality of output units, a plurality of memory units, and a plurality of storage units. A system may additionally include other suitable hardware components and/or software components. In some embodiments, a system may include or may be, for example, a personal computer, a desktop computer, a laptop computer, a workstation, a server computer, a network device, or any other suitable computing device.

Reference is made to Fig. 2, which is an overview of a system 200 according to some embodiments of the present invention. As shown, a system 200 may include a server 210 (e.g. a fraud analysis server) that may be any suitable computing device (e.g., a network server). As shown, server 210 may include a scoring unit 220 that may examine target web pages presented by web server 250 (e.g. operated by a merchant offering goods or services), create and/or update monetary transactions data. Server 210 may operate a scraper process 212 and a crawler processes 214, although these processes may be operated by other computing units. Server 210 may operate processes to clear or process transactions (e.g. act as a credit card clearance entity) for transactions conducted by server 250 operating a target website; in other embodiments, the fraud detection and transaction processing capabilities of server 210 may be executed by different servers operated by different organizations. A web server 260 may operate a website offering goods or services that server 210 does not agree to process transactions for, and thus may, fraudulently, mask those transactions by passing them off as transactions of similar value executed by server 250. As further described herein, scoring unit 220 may examine or analyze information in a newly seen or proposed transaction (for example, requested by user device 230 accessing a target website), relate the information to data in transactions data based on for example scraped or historic data and score, validate or authenticate the monetary transaction. As described herein, upon identifying a suspicious transaction, an embodiment may perform one or more actions, e.g., associate the transaction with a low score, send an email or other communication, to a predefined list of recipients, cause a server to block a transaction (e.g. by sending a signal or communication to the server), display popup a message or alert, (e.g. on a computer screen or elsewhere), flag a transaction, etc.

As further shown, system 200 may include, or may be operatively connected to, a web server 250 that may be any suitable server used for running or maintaining a target web site and system 200 may include, or may be operatively connected to, at least one user device 230 that may be a personal computer, laptop computer, smartphone or any other computing device enabling a user to communicate, over network 240, with web server 250.

Network 240 may be, may comprise or may be part of a private or public IP network, or the internet, or a combination thereof. Additionally or alternatively, network 240 may be, comprise or be part of a global system for mobile communications (GSM) network. For example, network 240 may include or comprise an IP network such as the internet, a GSM related network and any equipment for bridging or otherwise connecting such networks as known in the art. In addition, network 240 may be, may comprise or be part of an integrated services digital network (ISDN), a public switched telephone network (PSTN), a public or private data network, a local area network (LAN), a metropolitan area network (MAN), a wide area network (WAN), a wireline or wireless network, a local, regional, or global communication network, a satellite communication network, a cellular communication network, any combination of the preceding and/or any other suitable communication means. Accordingly, numerous elements of network 240 are implied but not shown, e.g., access points, base stations, communication satellites, GPS satellites, routers, telephone switches, etc. It will be recognized that embodiments of the invention are not limited by the nature of network 240.

Where applicable, computing devices, modules or units described herein, may be similar to, or may include components of, device 100 described herein. For example, scoring unit 220, server 250, server 210, user device 230, etc. may include a controller 105, memory 120 and executable code 125. Accordingly, operations performed by scoring unit 220 or fraud analysis server 210 as described herein may be performed by controller 105, that is, controller 105 may be adapted or configured to perform any operation, step, logic or method described herein with reference to scoring unit 220 and/or server 210.

In a typical case or scenario, a merchant operates or uses web server 250 to operate a target website which may for example offer for sale or sell products or other units, and perform transactions. A customer, user or buyer uses device 230 to surf to a web site provided by server 250. Typically, in order to pay for products and/or complete a purchase, customer, user or buyer initiates a credit card or other monetary transaction in which the server 250 (on behalf of the merchant) requests funds to be transferred from the customer to the merchant.

In some embodiments, a fraud analysis server (e.g. operating scoring unit 220) may scan a web site and may record and analyze products sold at the web site. For example, assuming products A, B, C, D and E are sold in a website supported or operated by server 250, products data 251 presented by the website may include individual prices of products A, B, C, D and E, their respective type or description (e.g., product A may be plums, product B may be a basketball and so on).

Products' data 251 may include any information related to products sold by a web site. For example, products data 251 may include, for each of products A, B, C, D and E, a shipping cost (e.g., based on a shipping address), a discount, whether or not discount coupons may be used for purchasing the product and so on.

Based on products' types, their respective costs and shipping costs, an embodiment may calculate, generate and/or record various combinations representing various purchases of one or more products. For example, for every combination (or set) of products sold in a website, the aggregated cost may be calculated. A cost of shipment may further be determined (e.g., calculated or deduced) for the set of products.

For example, assuming that the costs of products A, B, C, D and E are $9.99, $12.99, $15.99, $19.99 and $34.99, respectively, shipping costs for any of these products are $0, $8 or $13 and discounts are 5% or 8% (e.g., for a single purchase of $100 or more). For simplicity, a purchase of a set or combination of products is denoted using their respective character, e.g., a purchase of products A and B is denoted herein as AB. With the A, B, C, D and E notation in mind, and following the above example of prices or costs, an embodiment may calculate possible or likely costs (which may be included in monetary transactions data as described). For example, staying with the above example, possible or likely costs may be $22.98 for "AB" (a purchase of one product A and one product B), $24.98 for purchasing AC, $28.98 for purchasing products B and C, $29.97 for 3A (buying 3 items of type A), and so on.

Accordingly, a set of monetary transactions (and more specifically, amounts in monetary transactions) that reflect possible or likely transactions resulting from purchases of sets or combinations of products, at a website, may be created and stored, or recorded. For example, a set of likely amounts in monetary transactions may be included in (or viewed as) a white list and a high score may be associated with transactions that include one of the white listed amounts.

For example, a first likely, possible or white-listed amount in a transaction may be the price of the cheapest product that can be purchased in a website. For example, following the above example, $9.99 may be the minimum amount possible in a legitimate, non-fraudulent transaction. An embodiment may calculate additional likely, possible or white-listed amount by adding to a calculated amount the cost or price of the cheapest product. Of course, adding the cost of the cheapest product may be done for any amount calculated as described. For example, a first likely, possible or white-listed amount may be $15.99 (a purchase of product C) and the next likely, possible or white-listed amount may be $25.98, which reflects a purchase of product C and product A (which is the cheapest product in the set).

A set of likely, possible or white-listed amounts in transactions may be created based on shipping costs. For example, an embodiment may calculate, for any sets or number of combinations of products, one or more costs of shipping the set or combination. For example, based on where products are shipped from (e.g., an address or location of a dispatch facility provided by the merchant) and based on a shipping address of the customer (e.g., determined as described herein), an embodiment may calculate shipping costs for a combination of products that were purchased. An embodiment may thus calculate likely, possible or white-listed amounts in a transaction based on a set or combination of products and further based on shipping costs.

Any information related to shipping may be used for calculating likely, possible or white-listed amounts. For example, by analyzing data in a website, scoring unit 220 may automatically identify or determine that free shipping is provided for purchases above $500, for a specific product, same day shipping is $5, shipping of five or more products is $3, depending on time of delivery, shipping of a product can be $5.99, $7.99 and $10.99, and so on. Accordingly, an embodiment may calculate likely, possible or white-listed amounts in transactions based on prices of any combination of any number of products' types and further based on one or more shipping methods offered by a website.

An embodiment may calculate likely, possible or white-listed costs or amounts in transactions based on discounts, e.g., according to discount coupons usable in a website. For example, assuming coupons providing discounts of 5% and 8% can be used in a website, an embodiment may identify likely, possible or white-listed amounts in transactions reflecting a purchase of product A may be $9.99 (no discount), $9.49 (5% coupon or discount) and $9.19 (8% coupon or discount). Accordingly, an embodiment may identify, calculate, create and record likely, possible or white-listed amounts in transactions based on discounts.

In some cases, discounts may not be readily identified in, or extracted from data in a website. Furthermore, it may be that, after selecting a product, the buyer is asked to provide a coupon code or other information related to a discount (e.g., membership and the like). Some embodiments may automatically identify discounts or coupons and use such automatically identified discounts in creating a list of likely, possible or white-listed amounts in transactions.

For example, some embodiments may search (e.g., the internet) for discounts provided by the merchant associated with the website supported by web server 250. For example, an automated service that searches the internet for coupons for a specific website or merchant may scan the internet, find and provide a list of coupons (and their respective discounts, e.g., percentage or other discounts) usable for a specific merchant or website.

In some embodiments, discounts may be identified based on actual transactions. For example, having identified a set of likely, possible or white-listed amounts in transactions as described, an embodiment may examine actual amounts in transactions related to a website, compare the actual amounts to white-listed amounts and identify a correlation that indicates a discount. For example, having determined that $9.99 is a legitimate amount (e.g., related to a purchase of product A) and further identifying a set of transactions each with an amount of $9.49, an embodiment may determine that a coupon or discount of 5% is usable at the web site, and, accordingly, an embodiment may include both $9.99 and $9.49 in a table or other construct of white-listed amounts in transactions. Accordingly, an embodiment may identify discounts based on examining a relationship between possible and actually paid amounts.

Some embodiments may identify a coupon or a discount based on a number or quantity of same or similar items purchased. For example, if a coupon grants a discount if three chocolate bars are purchased together, then buyers may be likely to buy three chocolate bars and not two or four. Accordingly, having identified that a purchase of three chocolate bars occurs often (e.g., more than a threshold of 45% of the purchases are of three chocolate bars), an embodiment may determine that there exists a coupon or discount for three chocolate bars.

Using a white list that may include, or be created based on, one or more of: transaction amounts, shipment addresses and/or methods, discounts, user demographic data and publicly available information as described, some embodiments of the invention may identify various cases related to fraud as described. For example, some embodiments may identify transactions that make little sense and associate such transactions with a score that reflects a possible fraud, e.g., using a value of a score as described.

Some embodiments may identify transactions that may be fine (e.g., related to a possible purchase) but should not (or are not expected to) be very common (e.g., a transaction related to a purchase of five toy trucks and two tomatoes). For example, if, using his credentials or authorization as described, a first merchant attempts to sell products of another, second merchant (where the products of the second merchant are not listed or sold at the website), then transactions related to such attempts may map to surprising combinations of products as in the above toy trucks and tomatoes example. Moreover, repeating attempts to sell a specific product of the second merchant may cause an embodiment to identify a sequence of purchases of the same unlikely or suspicious combination. For example, assuming that the price of an electric drill sold by the second merchant is exactly the price of five toy trucks and two tomatoes, purchases of the electric drill (when made via the website of the first merchant) will cause an embodiment to detect an unlikely combination of products (five toy trucks and two tomatoes) that is repeatedly purchased, and, accordingly, an embodiment may warn, block or flag such purchases. A sequence of transactions may become suspicious if an amount of a transaction repeated in a sequence has a high authentication score (e.g. makes sense based on historical data) but is seen to be associated with fraud. In another embodiment a merchant's transactions may become suspect, despite high authentication scores, if many "bad" transactions from this merchant is seen.

A score associated, by an embodiment, with such transactions may reflect the unlikelihood of such transactions being related to legitimate purchases, that is, purchases made at the website being protected as described. As described, upon detecting suspicious transactions, an embodiment may forward a score and the transaction to a security entity that may decide whether or not to permit the transaction to take place.

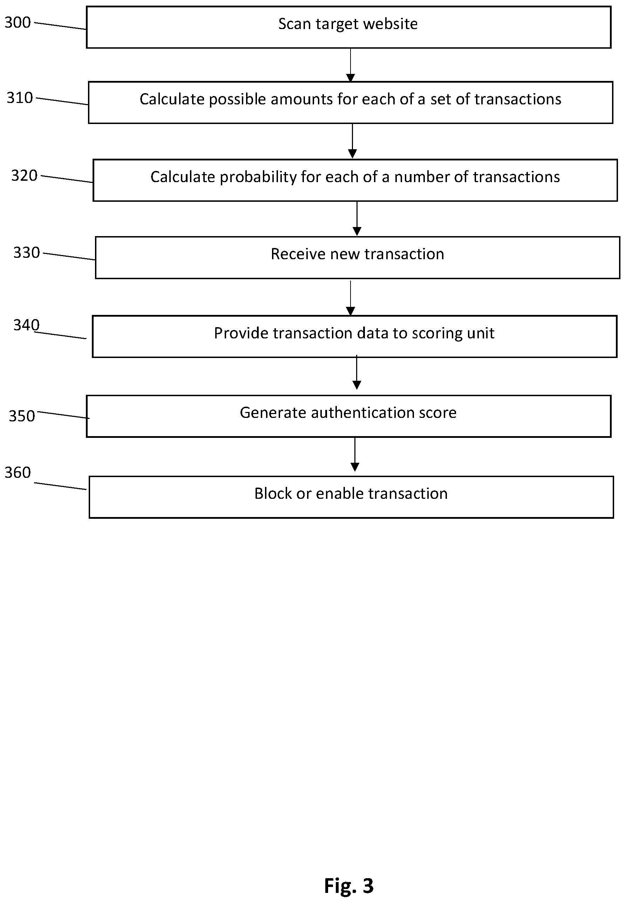

Reference is made to Fig. 3, which shows a flowchart of a method according to illustrative embodiments of the present invention. In operation 300, a process (e.g., executed by a fraud analysis server) may scan a target server or website to identify transaction units such as products provided by the website, prices or costs associated with those products, and other data such as shipping or discount data. In some embodiments, scanning may be done at other times, periodically, in reaction to a change (e.g. in prices or other data) at a target website, and/or in reaction to the receipt of a proposed transaction. In operation 310, based on the scanning a process may calculate a set of possible amounts related to each of a set of transactions, e.g. for each of a set of transactions, a set of combinations of products may be calculated. In operation 320, a process may calculate a probability for each transaction, for example based on rules associated with preset probabilities. In one embodiment historical data (e.g. describing the numbers of products in transactions) is analyzed to produce probabilities for numbers of each of items of a certain product. A white list of possible transactions may be created including combinations of products and/or quantities of those products and/or total costs for each transaction. A process may input the transaction amount of the newly seen transaction to take place, calculate possible combinations of products that make that, or sum to that, transaction amount, and for each combination may calculate a probability (in some embodiments, some of the probabilities may be calculated in advance, for example where each probability being associated with or based on a combination of products and/or numbers of units of products in a white listed transaction); these probabilities may be combined them to get probability of amount of transaction. In other embodiments binary choices (transaction possible/not possible) may be used.

In operation 330, details may be received of a newly seen transaction to take place at the target website. For example, a user (e.g. a customer or buyer) may use user device 230 to interact with web server 250, e.g., using user device 230, a user surfs to a website and selects a product s/he wants to buy. The user may initiate a monetary transaction, e.g., fill out credit card details and click on a "complete purchase" button.

In operation 340, transaction data may be provided to scoring unit 220, e.g. operated by a fraud analysis server. For example, transaction data may include name and other identifying information of the merchant, information identifying the online store where a purchase was made, information identifying the buyer (e.g., name, home or other address), a shipping address and the like. A buyer may have a profile at a website where the profile includes name, home and/or shipping address, history of purchases and so on, and any information included in, or available to, webserver 250 may be provided to a system 200. Accordingly, some embodiments of the invention may score transactions as described herein based on demographic or other user information. Data provided to scoring unit 220 may be collected and/or generated by server 250 and/or by any other entity, e.g., an entity participating in a purchase of a product. In operation 350, a process may generate an authentication score for the transaction based on the calculated probabilities. In operation 360, based on a score provided, server 250 (or any other relevant entity) may select to either block or enable a transaction. One example of an authentication score is that produced by the example embodiment of Table 5, where the higher the authentication score or probability (e.g. on a 0-1 range), the greater the probability that the transaction is legitimate, or within a service level agreement. For example, a process may produce a data structure associating each transaction amount for a target website with an authentication score or probability, and the proposed transaction may be assigned a score by inputting the proposed transaction amount to such a data structure.

Some embodiments may include blocking or enabling the transaction to take place at the target website based on the generated probability of fraud. For example, in one embodiment, a transaction score or authentication score may be provided to server 250 as shown or the score may be provided to any other entity, e.g., a bank, a credit card company and the like. An embodiment may select to block or prevent a transaction or a purchase based on a score provided as described, in other cases, based on a score and its comparison to appropriate thresholds, an embodiment may enable or permit a purchase and/or transaction. For example, a score over a threshold (e.g., according to a comparison such as described in the "Conclusion" of Table 17.) may cause server 250 to block a transaction, and a score under a threshold may cause server 250 to approve the transaction or to take no blocking action for the pending transaction, and/or allow the transaction to be processed to completion.

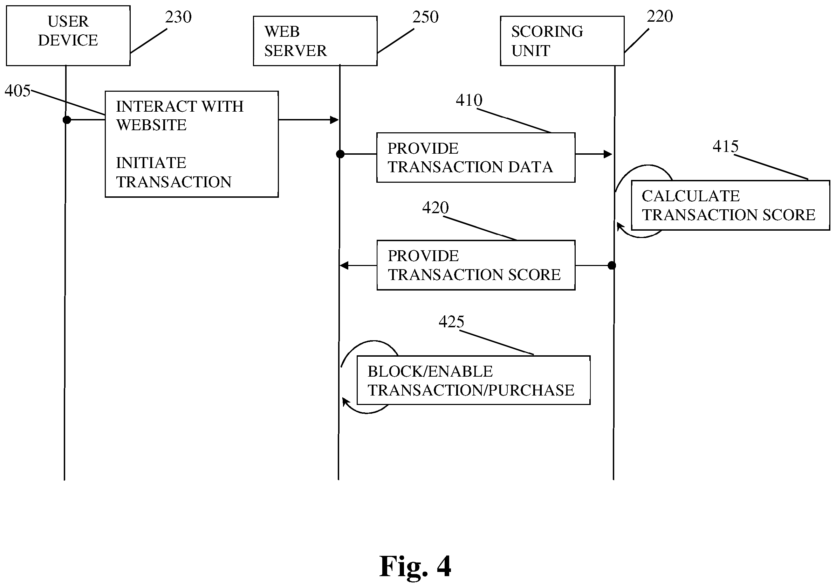

Reference is made to Fig. 4, which shows a flowchart of a method according to illustrative embodiments of the present invention. As shown by block 405, a user (customer or buyer) may use user device 230 to interact with web server 250, e.g., using user device 230, a user surfs to a website and selects a product s/he wants to buy. As further shown by block 405, a user may initiate a monetary transaction, e.g., fill out credit card details and click on a "complete purchase" button. As shown by block 410, transaction data may be provided to scoring unit 220. For example, transaction data provided as shown by block 410 may include name and other identifying information of the merchant, information identifying the online store where a purchase was made, information identifying the buyer (e.g., name, home or other address), a shipping address and the like. For example, a buyer may have a profile at a website where the profile includes name, home and/or shipping address, history of purchases and so on, and any information included in, or available to, webserver 250 may be provided to a system 200. Accordingly, some embodiments of the invention may score transactions as described herein based on demographic or other user information.

Data provided to scoring unit 220 may be collected and/or generated by server 250 and/or by any other entity, e.g., an entity participating in a purchase of a product. As shown by block 425, based on a score provided, server 250 (or any other relevant entity) may select to block or enable a transaction.

As shown by block 415, an embodiment (e.g., scoring unit 220) may calculate a transaction score for a transaction. As shown by block 420, an embodiment may provide a transaction score. For example, scoring unit 220 may provide a score to server 250 as shown or the score may be provided to any other entity, e.g., a bank, a credit card company and the like. As shown by block 425, an embodiment may select to block or prevent a transaction or a purchase based on a score provided as described, in other cases, based on a score, an embodiment may enable or permit a purchase and/or transaction.

For example, scoring unit 220 may associate a suspicious or unlikely transaction, or a service agreement violation, with a low score (e.g., 1 out of 10, or 0 on a scale of 0-1), and, provided with such low score (e.g. below a threshold), server 250 may prevent a user from completing a purchase of a product. In another case, if scoring unit 220 associates a transaction with a high score (e.g., 9 out of 10), server 250 may permit or enable a purchase and its related transaction to proceed.

In some embodiments, operations described and shown by blocks 410, 415 and 420 may be performed in real-time. The term "real-time" (also known and referred to in the art as "realtime", or "real time") as referred to herein generally relates to processing or handling of events at the rate or pace that the events occur or are received (possibly defined by human perception). For example, a system according to some embodiments of the invention may calculate a score for a transaction in real-time, e.g., within milliseconds or other very brief periods so that a score is provided, e.g., to server 250, virtually immediately after a buyer initiates a transaction but before the transaction is carried out or executed.

In some embodiments, data may be obtained for website via downloading or cooperation (e.g. a server operating a target website may send, download or sell to a fraud analysis server data on products offered, their prices, shipping and other data), or by other methods such as scraping. Scraping to scan websites may be performed in a number of manners. For example, a computer (e.g. a PC, a fraud analysis server, etc. such as server 210) may execute processes to access and analyze web pages or other information maintained by web server 250 shown in Fig. 2. An embodiment may execute a web scraping process which may use a web crawler or "spider," which may be an artificial intelligence process that when executed browses the internet to index and search for content by following links and exploring, and then providing found information to a web scraper, a specialized tool extracting data from a web page. An embodiment may use the Scrapy developer tool, e.g. created via on a web browser, or the ScrapeHero Cloud tool, each of which may or inspect an element on the target website, e.g. operated by web server 250. Such a process may focus on HTML tags, and use pattern matching using, for example, the Python's computer language. Such preexisting tools may interface with server 210 via APIs. Such scraping tools may, when analyzing websites, identify patterns, e.g. price appearing as currency figures, not words; the price may be the currency figure with the largest font size; the price appears inside first 600 pixels height; or other patterns. Scraping may include converting a target web page's HTML elements to JavaScript objects, then parsing and analyzing these objects.

Various rules, criteria and logic, as well as any information, may be used by some embodiments of the invention to calculate a score as shown by block 415. For example, a rule used for identifying suspicious transactions may be related to the number of similar (or same) products bought. For example, assuming product A is a shirt that costs $9.99, and further assuming that a customer is highly unlikely to by more than three shirts, a transaction with an amount of $39.96 may be identified as related to buying four shirts and may be flagged, e.g., associated with a low score of "5".

A score may be, may include or may represent a confidence level of a transaction being related to fraud. For example, staying with the above example where product A is a shirt, identifying a purchase of five shirts (e.g., based on a transaction amount of 5x$9.99=$49.95) may cause scoring unit 220 to associate the transaction with a score of "4", identifying an intended purchase of six shirts may cause scoring unit 220 to associate the transaction with a score of "2", and so on. In some embodiments, an action taken may be based on the value of a score, e.g., web server 250 may permit or enable transactions with a score that is higher than "6" and block, prevent and/or report all transactions with a score lower than six. In some embodiments, a threshold used for blocking or allowing transactions may be based on an amount, user demographic data, location and so on. For example, transactions with an amount greater than $150 may be enabled only if the score provided by scoring unit 220 is higher than "7", while transactions with an amount between $50 and $150 may be allowed if the score provided by scoring unit 220 is higher than "4". Any other thresholds may be used. For example, thresholds as described herein may be dynamically and automatically changed according to a time of day when a purchase is made, a location of the buyer and so on.

In some embodiments, transactions data or other data may include a mapping between (or from) a number of units of a product and cost or amount. For example, staying with the above example, a transaction with an amount of $29.97 may be mapped to, or identified as, a purchase of three units of product A as described. In the above example where A is a shirt, identifying a purchase of five shirts may be based on a mapping of $49.95 to five items of type A. Various rules may be used, for example, a rule including a threshold of three items of product A may cause scoring unit 220 to associate a transaction for $49.95 with a low score by first mapping $49.95 to three items of product A and then apply a rule (which says buying more than three items of this type is suspicious) for product A.

Of course, a single, specific amount in a transaction (e.g., $29.97) may be mapped to a number of combinations of products, and, in such case, an embodiment may apply operations as described herein to each combination of products and a score for a transaction as may be set based on a set of scores calculated for each of the possible combination of products. An embodiment may further categorize products sold in a web site. For example, an embodiment may analyze a website and categorize products, e.g., categories of products may be "fruits", "sporting goods" and so on.

In some embodiments, a rule for setting a transaction score may be related to the type of a product and the shipping method. It is noted that, by scanning a website as described, identifying and calculating possible or likely amounts in transactions and by further mapping amounts to product combinations, an embodiment of the invention can provide advantages that are impossible using current or known systems or methods. For example, being able to determine which products are bought based on an amount in a transaction as described, some embodiments of the invention may determine whether or not a shipping method is normal (likely) or suspicious. For example, an overseas shipment of fruit is unlikely and may be identified by scoring unit 220. For example, being able to determine which products are bought based on an amount in a transaction as described, some embodiments of the invention may determine whether or not a combination of products about to be purchased in a single transaction is normal (likely) or suspicious (unlikely).

Some embodiments may determine whether or not a combination of products about to be purchased in a single transaction is normal (likely) or suspicious (unlikely), and generate an authentication score, based on examining transactions and identifying a sequence of transactions that is related to a repeating purchase of unexpected quantities of products. For example, if 20% of the transactions are identified as a purchase of thirteen melons and four tuna fish cans (a surprising combination of products, and a similar combination of products repeated), then, having identified an unlikely sequence, an embodiment may flag or even block transactions related to a purchase of thirteen melons and four tuna fish cans. An authentication score may be generated based on a sequence of transactions that are related to a similar combination of products. An authentication score for a transaction may be calculated based on a sequence of transactions related to an unlikely combination of products purchased by a single transaction.

For example, based on an amount in a transaction, scoring unit 220 may determine that the product a user wants to buy is two pounds of oranges which are to be shipped using a shipment method that will result in delivering the oranges in two weeks, in such example, using a rule that flags a slow shipment method for fruits, scoring unit 220 may associate the transaction with a low score, which may in turn cause server 250 to block or prevent the transaction. Similarly, an expensive shipment (e.g., for fast delivery) of some products may be identified as a potential malicious activity and result in an embodiment flagging a transaction by associating it with a low score which is reported, e.g., to server 250 as described. It is noted that rules applied by scoring unit 220 may be dynamically updated (learned) by system 200. For example, adapted to map transaction amounts to products and shipping methods, scoring unit 220 may record, e.g., during a learning phase, what type of shipping is typically used for each type of products in a website, and scoring unit 220 may further configure a rule for each type of product, e.g., set a rule that flags a shipping method, a large number of items or units of a single product, an unlikely combination of products and so on. In another example, a transaction related to a purchase of 0.12 kilograms of plums may be identified or detected as described as unlikely (suspicious) and may be flagged or scored low as described.

As described, some embodiments may identify or determine a mapping between combinations of products and shipping methods and amounts in transactions. An amount in a transaction may additionally be mapped to a discount (e.g., a discount coupon used in a website). For example, a white list of amounts may be calculated based on combinations of product, their respective costs and further based on a discount. Accordingly, rules related to discounts may be used by scoring unit 220. For example, a discount coupon never used before by a specific user may cause scoring unit 220 to flag the transaction, e.g., associate the transaction with a low score, send an email to a predefined set of recipients, popup a message on a computer screen and so on.

In some embodiments, scoring a transaction may be based on the combination of a product and a shipping address. For example, some embodiments may identify suspicious activity (e.g., fraudulent transactions) based on a shipping address of some products. For example, a transaction related to shipment of non-kosher food to a specific address may be flagged (associated with a low score), a purchase of football items of a competing team and so on. It will be noted that, in order to perform methods described herein, some embodiments of the invention may obtain and use any information, e.g., publicly available information on the Internet that identifies users, information provided by various authorities and so on. For example, having classified products as kosher or non-kosher, further identifying, based on a transaction as described, that non-kosher food is about to be purchased and shipped to a specific neighborhood, and further using information indicating a religion of a majority of people in the neighborhood, an embodiment may flag or even block the transaction or purchase.

As described, some embodiments of the invention may determine whether or not a transaction is suspicious (and should be flagged, blocked or cause alerting a user or other entity) may be based on any one of: a combination of products purchased and their respective costs, a shipping cost, a shipping address and a discount (e.g., a coupon).

Some embodiments of the invention that may determine whether or not a transaction is suspicious and should be flagged, blocked or that may cause alerting a user or other entity may be based on any one of: number of product units purchased, a sequence of transactions and/or repeating purchases of similar or same combinations of products.

For example, based on details in a monetary transaction related to a purchase, e.g., a sum or amount therein, some embodiments may determine or identify any one of: a combination of products purchased and their respective costs, a shipping cost, a shipping address, a discount (e.g., a coupon), the number of product units purchased, a sequence of transactions and/or repeating purchases of similar or same combinations of products.

As described, the sum or amount in a monetary transaction may be mapped or translated, e.g., by scoring unit 220, to a specific number of items or to a specific set or combination of items. Of course, in some cases, a specific amount may match two or more different items or products, e.g., an amount may be the price of an electric appliance (e.g., kitchen mixer) or the price of two hundred pairs of socks. If an amount in a monetary transaction can be mapped to, or associated with, a number of different items or sets of items, scoring unit 220 may inspect additional information in order to identify products purchased by the transaction.

For example, staying with the above mixer and socks example, if the shipping address is a home address, then it may be assumed that the item purchased is a mixer, as it is unlikely that an individual person would buy two hundred pairs of socks. Any other data elements related to a monetary transaction may be taken into account when determining whether or not a transaction is suspicious. For example, staying with the above mixer and socks example, a shipping cost of $50 may cause scoring unit 220 to determine that a mixer was purchased, as it is unlikely that a person would pay $50 for shipment of socks, or a history showing that the same buyer bought socks in the past may rule out socks, and so on.

Some embodiments of the invention may use any parts of data identified as described. For example, scoring unit 220 may automatically identify or recognize, (e.g., based on a sum of money in a transaction) data elements such as: a combination of products purchased and their respective costs; a shipping cost; a shipping address; a discount (e.g., a coupon); the number of product units purchased; a sequence of transactions and/or repeating purchases of similar or same combinations of products. Scoring unit 220 may apply any rule or logic to one or more of the identified data elements.

For example, having identified the above mentioned data elements, scoring unit 220 may flag a transaction based on the shipment address being a Post Office Box (P.O.B.) and not a home address, or scoring unit 220 may flag a transaction based on a specific product being shipped to a home address, e.g., a manufacturing tool is typically sent to a factory, such that rule or logic in scoring unit 220 may flag a shipment of a manufacturing tool to a home address (e.g., the home address of the buyer).

In another example, scoring unit 220 may flag a transaction based on a combination of number of product units and shipping address, e.g., twenty dolls sent to a home address and not to a business address may be suspicious and acted upon as described. In another example, scoring unit 220 may flag a transaction based on a combination of a shipping cost and a product, e.g., shipping a product worth $2 at a cost of $50 may be suspicious and acted upon as described. Accordingly, some embodiments of the invention may generate an authentication score for a transaction based on any combination of data elements automatically identified as described.

In some embodiments, odd, surprising, unlikely or rare combinations of products may be identified and flagged or cause an embodiment to generate an alert, for example, a transaction related to a purchase of twenty-one basketballs or a transaction related to a purchase of a doll and an electric drill may be identified (e.g., by scoring unit 220, based on a mapping of combinations of products to amounts in transactions) and an embodiment may flag the transaction, block the transaction or perform one or more actions.

Any system or method may be used by embodiments of the invention to receive details of a monetary transaction related to a purchase at a website. For example, details of a monetary transaction may be provided to scoring unit 220 by web server 250, which may obtain some of the details of a monetary transaction from a buyer and/or may add details to a monetary transaction. In other cases, details of a monetary transaction may be received, e.g., by scoring unit 220, from a bank or other relevant entity. It will accordingly be understood that the scope of the invention is not limited by the system or method used for obtaining or receiving details of a monetary transaction.

An action taken by an embodiment may be a warning regarding a merchant. For example, upon identifying an uncommon transaction that is repeated, an embodiment may send a warning to an entity (e.g., bank, credit card company etc.) that controls or supervises an account. For example, an embodiment may inform a supervisor that a lot of transactions (e.g., 20% of all transactions in the last 24 hours) are for $211.82, and this may indicate that a lot of buyers are doing something fishy, e.g., they all buy fourteen dolls and two bikes. This kind of warning may enable a supervisor to readily and easily identify, for example, that a merchant is covering for activities or transactions that are unrelated to his or her website, e.g., goods from another merchant are sold through the merchant's website.

An embodiment may classify transactions, e.g., a transaction may be classified as one of normal, unusual or impossible. For example, a score between "0" and "3" may mean, or indicate the transaction is an impossible one and is highly likely to be related to a fraud, a score between "4" and "7" may mean, or indicate the transaction is unusual and a score between "8" and "10" may mean, or indicate the transaction is normal. The actual value of the score may be a confidence or severity level. For example, a score of "0" may mean the transaction is highly likely a fraud, and a score of "3" may mean the transaction is (not highly) likely a fraud.

Some embodiments may identify (and flag or score) transactions based on a sequence or set of transactions. For example, a set or sequence of same or similar amounts in a respective sequence or set of transactions in a predefined time interval may be identified. For example, ten transactions related to purchasing 1.5 kilograms of oranges (similar transactions) in a single day (predefined time interval) may breach a rule used by scoring unit 220 and may cause unit 220 to generate an alert, associate transactions (e.g., future purchases of 1.5 kilograms of oranges) with a low score and so on.

An embodiment may periodically, or based on an event or command, scan (or rescan) a website to update or refresh rules, white lists, generate or updates various mappings between any combination of: amounts; product types; combinations of products in a single purchase; shipment costs and any other data as described herein. Accordingly, mappings, rules and operations described herein may be dynamically, periodically or continuously update. For example, an addition of a product to a website or an update of a price may trigger scoring unit 220 to rescan the website.

Some embodiments of the invention may improve computerized fraud detection technology, e.g., by paving the way toward adaptive fraud prevention systems in which, e.g., detection thresholds (such as for example the thresholds used in Tables 16-17 to which a probability of fraud may be compared) may be adjusted, for example in real time, based on transaction data volume and patterns, ensuring optimal system performance (in one nonlimiting example: a threshold for a transaction to be determined as fraudulent may be lowered, e.g., from 0.9 to 0.8, in case more than N transactions are identified or found in a predetermined time period, e.g., N=10 fraudulent transactions per day). Some embodiments may be executed on dedicated servers and/or edge computing devices to process and flag fraudulent transactions locally, reducing latency and computational cost for critical applications and systems, such as, e.g., point-of-sale terminals. Some embodiments may be used to generate intelligent fraud pattern databases or libraries that may be updated with new potentially fraudulent transactions or patterns, which may improve cybersecurity for various client computer systems (including, e.g., not only the target website where at least some transactions are validated). Subset sum algorithms and probabilistic models used in some embodiments may support the development of, e.g., self-healing computer networks, where anomalies in data traffic (such as, e.g., a large volume of internet transactions) may be detected and addressed in real time, e.g., to prevent downtime or malicious activity (for example by automatically blocking, flagging, or allowing transactions instead of having to disable all transactions on the website, or any network traffic on the website, until a security event may be resolved).

It should be noted that while some nonlimiting embodiments of the present invention are described herein in the context of fraud detection applied to transactions performed on an internet website, different embodiments of the invention may be unrelated to commerce or to human activity.

For example, some embodiments may be used for, e.g., anomaly detection in environmental monitoring using the combination of machine learning-based probability calculations and automatic tag determination techniques. For instance, using a subset sum algorithm to identify discrepancies in data collected from environmental sensors (such as temperature, humidity, or air quality) may help detect potential sensor malfunctions or data tampering. Some embodiments may analyze large datasets of environmental metrics, looking for valid combinations of expected values (such as total energy consumption or weather patterns recorded in historical data). By evaluating all possible combinations of sensor readings and comparing them to the expected sum, some embodiments may flag anomalies that deviate from typical patterns, such as an unexpected temperature drop or pollutant spike, indicating faulty sensors or data input. Additionally or alternatively, probability calculations illustrated herein in the nonlimiting example of calculating a probability of fraud or authentication score for a transaction may be applied to detect rare or unexpected events in environmental data. For instance, if a machine learning model trained on past environmental conditions predicts a 60% chance that a sensor would report a certain temperature range during a specific season, a significant deviation from this probability (e.g., a 2% chance) may indicate an anomaly or malfunction. In wildlife conservation, automatic tag determination algorithms like YOLO or Faster R-CNN may be used, for example, to classify animal species in camera trap images or videos, and a probability model could predict the likelihood of rare species appearing in specific areas. If a camera detects a species with a low predicted probability (e.g., a 5% chance of encountering an endangered animal in a given region), and this event occurs much more frequently than expected, fraud or anomaly detection techniques descried herein with regard to some nonlimiting embodiments may indicate unusual behavior or environmental changes, such as habitat disruption or poaching activity. Thus, the combination of subset sum analysis and machine learning based labeling of items and probability calculations may allow the system to monitor and flag abnormal patterns in, e.g., ecological data and wildlife behavior, as well as in countless additional data analysis example contexts. The combination of technological elements and operations as described herein with regard to some nonlimiting example embodiments in not, in itself, rooted in human activity or commerce, and is not essentially related to human activity or commerce.

In another example, efficient packaging of items (such as, e.g., products that may be purchased at a store, at the target website, and the like) may require tightly fitting the items in a single box to minimize wasted space or protect items from environmental factors (e.g., from air exposure during long-term storage). Some embodiments of the invention using the subset sum algorithm may be used to determine the optimal box sizes to stock based on the combinations of item sizes for items typically provided or packaged together. For instance, 3 units of product X and 2 units of product Y are often ordered and/or packaged together, where each of X and Y has a defined size/volume A (e.g., 30 cm x 30 cm) and B (15 cm x 20 cm), respectively - some embodiments may compute an optimal package size as 3A+2B. By analyzing historical patterns using machine learning-based tagging to identify common combinations and labels (e.g., "bulk seeds", "shirts", etc.) and corresponding features or attributes (e.g., "shirts" are most commonly packaged using a box of size A), a physical store may prioritize stocking only the package sizes that align with high-probability purchase combinations, ensuring efficiency without the need to maintain an impractical variety of packaging options.

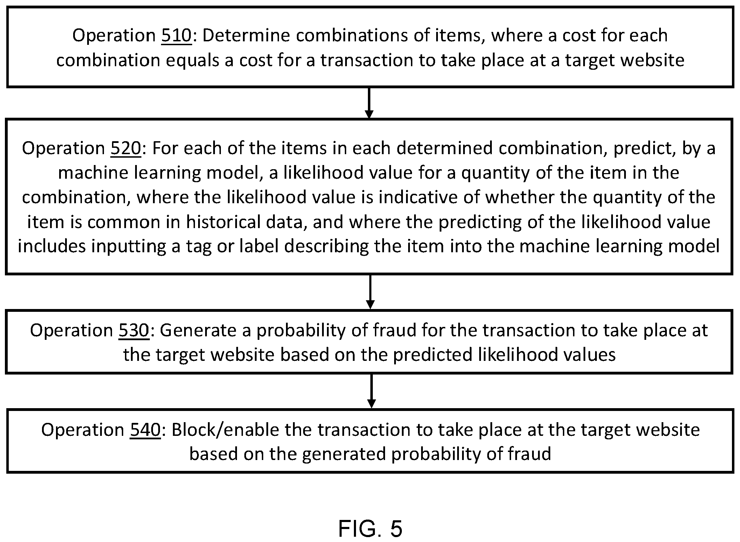

Fig. 5 shows an example process for detecting internet fraud according to some embodiments of the invention. Some embodiments may determine one or more combinations of items, where a cost for each combination may equal a cost for a transaction to take place at a target website (e.g., using a subset sum algorithm and costs of items as scraped from the target website; operation 510). For each of the items in each determined combination, some embodiments may predict, by a machine learning model, a probability or likelihood value for a quantity of the item (e.g., numbers of units of the item) in the determined combination, where the probability or likelihood value may be indicative of whether the quantity of the item in the combination is common in historical data (e.g., data used to train the machine learning model), and where the predicting of the likelihood value may include inputting a tag or label describing the item into the machine learning model (where the model may be trained on datasets including historical transactions associated with labels or tags for products; operation 520). Some embodiments may generate a probability of fraud for the transaction to take place at the target website based on one or more of the predicted likelihood values (e.g., by aggregating likelihood values for different items and their corresponding quantities in a combination; operation 530), and may block or enable the transaction to take place at the target website based on the generated probability of fraud (e.g., by comparing the generated probability to predetermined threshold values to determine a suspicion level for the transaction; operation 540). Additional or alternative operations may be included in internet fraud detection processes according to different embodiments of the invention.

In the description and claims of the present application, each of the verbs, "comprise" "include" and "have", and conjugates thereof, are used to indicate that the object or objects of the verb are not necessarily a complete listing of components, elements or parts of the subject or subjects of the verb. Unless otherwise stated, adjectives such as "substantially" and "about" modifying a condition or relationship characteristic of a feature or features of an embodiment of the disclosure, are understood to mean that the condition or characteristic is defined to within tolerances that are acceptable for operation of an embodiment as described. In addition, the word "or" is considered to be the inclusive "or" rather than the exclusive or, and indicates at least one of, or any combination of items it conjoins.

Descriptions of embodiments of the invention in the present application are provided by way of example and are not intended to limit the scope of the invention. The described embodiments comprise different features, not all of which are required in all embodiments. Some embodiments utilize only some of the features or possible combinations of the features. Variations of embodiments of the invention that are described, and embodiments comprising different combinations of features noted in the described embodiments, will occur to a person having ordinary skill in the art. The scope of the invention is limited only by the claims.

While certain features of the invention have been illustrated and described herein, many modifications, substitutions, changes, and equivalents may occur to those skilled in the art. It is, therefore, to be understood that the appended claims are intended to cover all such modifications and changes as fall within the true spirit of the invention.

Various embodiments have been presented. Each of these embodiments may of course include features from other embodiments presented, and embodiments not specifically described may include various features described herein.
The description also includes the subject matter of the following clauses:
**Clause 1.** A computerized method of detecting internet fraud, the method comprising:
   determining, by a computer processor, one or more combinations of one or more items, wherein a cost for each of the determined one or more combinations equals a cost for a transaction to take place at a target website;
   for each of the items in each determined combination, predicting, by a machine learning model, a likelihood value for a quantity of the item in the determined combination, wherein the predicted likelihood value is indicative of whether the quantity of the item in the determined combination is common in historical data, wherein the predicting of the likelihood value comprises inputting a tag describing the item into the machine learning model;
   generating, by the processor, a probability of fraud for the transaction to take place at the target website based on one or more of the predicted likelihood values; and
   blocking or enabling the transaction to take place at the target website based on the generated probability of fraud.
**Clause 2.** The computerized method of clause 1, comprising scanning, by a server comprising the processor, the target website to identify:
   a plurality of items provided by the website, the plurality of items provided by the website including the one or more items, and
   a plurality of tags associated with one or more of the items, the plurality of tags including the tag describing the item.
**Clause 3.** The computerized method of clause 1, wherein the generating of the probability of fraud comprises:
   calculating a probability of fraud for each of the determined combinations using one or more of the predicted likelihood values; and
   aggregating one or more of the calculated probabilities of fraud for the determined combinations.
**Clause 4.** The computerized method of clause 1, wherein the historical data comprises one or more past transactions associated with the tag describing the item.
**Clause 5.** The computerized method of clause 1, wherein the determining of the one or more combinations is performed based on the cost for the transaction to take place at the target website not being found in a white list of transaction costs.
**Clause 6.** The computerized method of clause 2, comprising determining, by a second machine learning (ML) model, one or more tags of the plurality of tags, wherein the second ML model is trained using information linking item names to tags.
**Clause 7.** The computerized method of clause 1, wherein the determining of one or more of the combinations comprises recursively solving a subset sum problem.
**Clause 8.** The computerized method of clause 2, wherein the scanning comprises executing a web scraping process, the web scraping process comprising triggering one or more dynamic internet browser events to reveal one or more hidden elements in the target website.
**Clause 9.** The computerized method of clause 2, wherein the method is executed using a hardware-accelerated computer system, and wherein the method comprises determining, using a convolutional neural network (CNN), one or more tags of the plurality of tags, wherein the CNN is trained using a plurality of image files.
**Clause 10.** A computerized system for detecting internet fraud, the system comprising:
   a memory; and
   one or more processors configured to:
      determine one or more combinations of one or more items, wherein a cost for each of the determined one or more combinations equals a cost for a transaction to take place at a target website;
      for each of the items in each determined combination, predict, by a machine learning model, a likelihood value for a quantity of the item in the determined combination, wherein the predicted likelihood value is indicative of whether the quantity of the item in the determined combination is common in historical data, wherein the predicting of the likelihood value comprises inputting a tag describing the item into the machine learning model;
      generate a probability of fraud for the transaction to take place at the target website based on one or more of the predicted likelihood values; and
      block or enable the transaction to take place at the target website based on the generated probability of fraud.
**Clause 11.** The computerized system of clause 10, wherein one or more of the processors is to scan the target website to identify:
   a plurality of items provided by the website, the plurality of items provided by the website including the one or more items, and
   a plurality of tags associated with one or more of the items, the plurality of tags including the tag describing the item.
**Clause 12.** The computerized system of clause 10, wherein the generating of the probability of fraud comprises:
   calculating a probability of fraud for each of the determined combinations using one or more of the predicted likelihood values; and
   aggregating one or more of the calculated probabilities of fraud for the determined combinations.
**Clause 13.** The computerized system of clause 10, wherein the historical data comprises one or more past transactions associated with the tag describing the item.
**Clause 14.** The computerized system of clause 10, wherein the determining of the one or more combinations is performed based on the cost for the transaction to take place at the target website not being found in a white list of transaction costs.
**Clause 15.** The computerized system of clause 11, wherein one or more of the processors is to determine, by a second machine learning (ML) model, one or more tags of the plurality of tags, wherein the second ML model is trained using information linking item names to tags.
**Clause 16.** The computerized system of clause 10, wherein the determining of one or more of the combinations comprises recursively solving a subset sum problem.
**Clause 17.** The computerized system of clause 11, wherein the scanning comprises executing a web scraping process, the web scraping process comprising triggering one or more dynamic internet browser events to reveal one or more hidden elements in the target website.
**Clause 18.** The computerized system of clause 11, wherein one or more of the processors include a hardware accelerated computer system, and wherein one or more of the processors is to determine, using a convolutional neural network (CNN), one or more tags of the plurality of tags, wherein the CNN is trained using a plurality of image files.
**Clause 19.** A computerized method of detecting internet fraud, the method comprising:
   computing, by a computer processor, one or more subsets of one or more items, wherein a cost for each of the determined one or more subsets equals a cost for a transaction to take place at a website;
   for each of the items in each determined subset, generating, by a machine learning model, a probability value for a number of units of the item in the determined subset, wherein the generated probability value is indicative of whether the number of units of the item in the determined subset is common in historical data, wherein the generating of the probability value comprises inputting a label describing the item into the machine learning model;
   generating, by the processor, an authentication score for the transaction to take place at the target website based on one or more of the generated probability values; and
   preventing or permitting the transaction to take place at the target website based on the generated authentication score.
**Clause 20.** The computerized method of clause 19, wherein the historical data comprises one or more past transactions associated with the label describing the item.

## Claims

1. A computerized method of detecting internet fraud, the method comprising:
determining, by a computer processor, one or more combinations of one or more items, wherein a cost for each of the determined one or more combinations equals a cost for a transaction to take place at a target website;
for each of the items in each determined combination, predicting, by a machine learning model, a likelihood value for a quantity of the item in the determined combination, wherein the predicted likelihood value is indicative of whether the quantity of the item in the determined combination is common in historical data, wherein the predicting of the likelihood value comprises inputting a tag describing the item into the machine learning model;
generating, by the processor, a probability of fraud for the transaction to take place at the target website based on one or more of the predicted likelihood values; and
blocking or enabling the transaction to take place at the target website based on the generated probability of fraud.

2. The computerized method of claim 1, comprising scanning, by a server comprising the processor, the target website to identify:
a plurality of items provided by the website, the plurality of items provided by the website including the one or more items, and
a plurality of tags associated with one or more of the items, the plurality of tags including the tag describing the item.

3. The computerized method of claim 1, wherein the generating of the probability of fraud comprises:
calculating a probability of fraud for each of the determined combinations using one or more of the predicted likelihood values; and
aggregating one or more of the calculated probabilities of fraud for the determined combinations.

4. The computerized method of claim 1, wherein the historical data comprises one or more past transactions associated with the tag describing the item.

5. The computerized method of claim 1, wherein the determining of the one or more combinations is performed based on the cost for the transaction to take place at the target website not being found in a white list of transaction costs.

6. The computerized method of claim 2, comprising determining, by a second machine learning (ML) model, one or more tags of the plurality of tags, wherein the second ML model is trained using information linking item names to tags.

7. The computerized method of claim 2, wherein the scanning comprises executing a web scraping process, the web scraping process comprising triggering one or more dynamic internet browser events to reveal one or more hidden elements in the target website.

8. The computerized method of claim 2, wherein the method is executed using a hardware-accelerated computer system, and wherein the method comprises determining, using a convolutional neural network (CNN), one or more tags of the plurality of tags, wherein the CNN is trained using a plurality of image files.

9. A computerized system for detecting internet fraud, the system comprising:
a memory; and
one or more processors configured to:
determine one or more combinations of one or more items, wherein a cost for each of the determined one or more combinations equals a cost for a transaction to take place at a target website;
for each of the items in each determined combination, predict, by a machine learning model, a likelihood value for a quantity of the item in the determined combination, wherein the predicted likelihood value is indicative of whether the quantity of the item in the determined combination is common in historical data, wherein the predicting of the likelihood value comprises inputting a tag describing the item into the machine learning model;
generate a probability of fraud for the transaction to take place at the target website based on one or more of the predicted likelihood values; and
block or enable the transaction to take place at the target website based on the generated probability of fraud.

10. The computerized system of claim 10, wherein one or more of the processors is configured to scan the target website to identify:
a plurality of items provided by the website, the plurality of items provided by the website including the one or more items, and
a plurality of tags associated with one or more of the items, the plurality of tags including the tag describing the item.

11. The computerized system of claim 10, wherein the generating of the probability of fraud comprises:
calculating a probability of fraud for each of the determined combinations using one or more of the predicted likelihood values; and
aggregating one or more of the calculated probabilities of fraud for the determined combinations.

12. The computerized system of claim 10, wherein the determining of the one or more combinations is performed based on the cost for the transaction to take place at the target website not being found in a white list of transaction costs.

13. The computerized system of claim 11, wherein one or more of the processors is configured to determine, by a second machine learning (ML) model, one or more tags of the plurality of tags, wherein the second ML model is trained using information linking item names to tags.

14. The computerized system of claim 11, wherein the scanning comprises executing a web scraping process, the web scraping process comprising triggering one or more dynamic internet browser events to reveal one or more hidden elements in the target website.

15. The computerized system of claim 11, wherein one or more of the processors include a hardware accelerated computer system, and wherein one or more of the processors is configured to determine, using a convolutional neural network (CNN), one or more tags of the plurality of tags, wherein the CNN is trained using a plurality of image files.
